# EUROPÄISCHE PATENTANMELDUNG

(11) **EP 4 293 590 A1**
(43) Veröffentlichungstag der Anmeldung: **20.12.2023**
(21) Anmeldenummer: 23179277.1
(22) Anmeldetag: 14.06.2023
(51) Int. Cl.: G06Q 10/08, B66F 9/06, G05B 19/418

(54) **KOLLABORATIVE TRANSPORTTECHNIK**

(30) Priorität: 14.06.2022 DE 102022114953; 14.06.2022 DE 202022103342 U
(71) Anmelder: KELO Robotics GmbH, 86159 Augsburg (DE)
(72) Erfinder: Ketels, Arthur, 86159 Augsburg (DE); Shahsavari, Armin, 86159 Augsburg (DE); Nowak, Walter, 86159 Augsburg (DE); Blumenthal, sebastian, 86159 Augsburg (DE); Bakaraniya, Dharmin, 86159 Augsburg (DE); Tan, Leonardo, 86159 Augsburg (DE); Ketels, Richard, 86159 Augsburg (DE)
(74) Vertreter: ERNICKE Patent- und Rechtsanwälte PartmbB

(57) **Zusammenfassung**

Die Erfindung betrifft eine Logistik- und Transporttechnik zum Befördern von Waren im Arbeitsbereich eines Logistik-Systems. Es umfasst einen Transportroboter mit zu gehörigem Steuerverfahren und eine Logistiksteuerung mit zugehörigem Steuerverfahren. Der Transportroboter (1) umfasst eine Bewegungsplattform (10), einen Ladungsaufnahmebereich (11), eine Antriebseinrichtung (12), mindestens eine Steuerung (20) und eine Fremdsteuer-Schnittstelle (21). Die Fremdsteuer-Schnittstelle (21) ist dazu ausgebildet ist, eine externe Eingabe (EE, EE*) zu empfangen, und die Steuerung (20) ist dazu ausgebildet, die Antriebseinrichtung (12) zeitweise im Rahmen eines Eigen-Steuermodus (STE) auf Basis autonom erzeugter Kursvorgaben (KV) anzusteuern und zeitweise im Rahmen eines Fremd-Steuermodus (STF) auf Basis von Kursvorgaben (KV) anzusteuern, die gemäß der externen Eingabe (EE, EE*) erzeugt sind. Sie Steuerung (20) verarbeitet eine Aktionsfolge (AF), die eine Mehrzahl von Aktionen (Ai) zur Erfüllung eines Transportauftrags (LT) in einer vorgesehenen Reihenfolge umfasst. Eine Aktion (Ai) ein maschinenlesbares Datenobjekt und umfasst einen Soll-Zustand zum Ende der Aktion (Ai) als Ziel-Zustand (S1). Die Aktionen (A1, A2, A3) in der Aktionsfolge (AF) umfassen mindestens zwei unterschiedliche Aktions-Arten: eine autonome Eigen-Aktion (A_e), die vorsieht, dass der Transportroboter (1) im Eigen-Steuermodus (STE) tätig wird, um autonom in den jeweiligen Ziel-Zustand (S1) zu gelangen, und eine kollaborative Interaktion (A_k), bei der der Transportroboter (1) eine externe Eingabe (EE) von einer Bedienperson anfordert (KA) und im Fremd-Steuermodus (STF) gemäß der externen Eingabe (EE) tätig wird.

Die zur Veröffentlichung mit der Zusammenfassung vorgesehene Figur ist Figur 1.

## Beschreibung

Die vorliegende Erfindung liegt auf dem Gebiet der Logistiksteuerung sowie des Ladungstransports mit autonomen Transportrobotern. Sie betrifft eine Transporttechnik, insbesondere ein Logistik-System, einen Transportroboter und einen Lastaufnahme-Mechanismus, die eine Kollaboration ermöglichen, das heißt das Zusammenwirkung eines Menschen mit einem kollaborativen Transportroboter.

Soweit nachfolgend der Begriff "Ladung" verwendet ist, bezeichnet dieser Begriff ein Transportgut, das eine beliebige Ausgestaltung haben kann. Der Begriff Transportgut kann eine Ware in fester Form, flüssiger Form oder Gasform umfasst. Die Ladung kann einen Ladungsträger umfassen, der ebenfalls beliebig ausgebildet sein kann, beispielsweise als Palette, Kiste, Karton, Tank, Sack, Netz oder Hängegestell.

Rein aus Gründen der vereinfachten Darstellung bezieht sich die vorliegende Offenbarung nachfolgend auf eine Ladung mit einem Ladungsträger in Ausbildung einer Palette (Euro-Palette). Die Offenbarung ist auf beliebige andere Arten einer Ladung übertragbar.

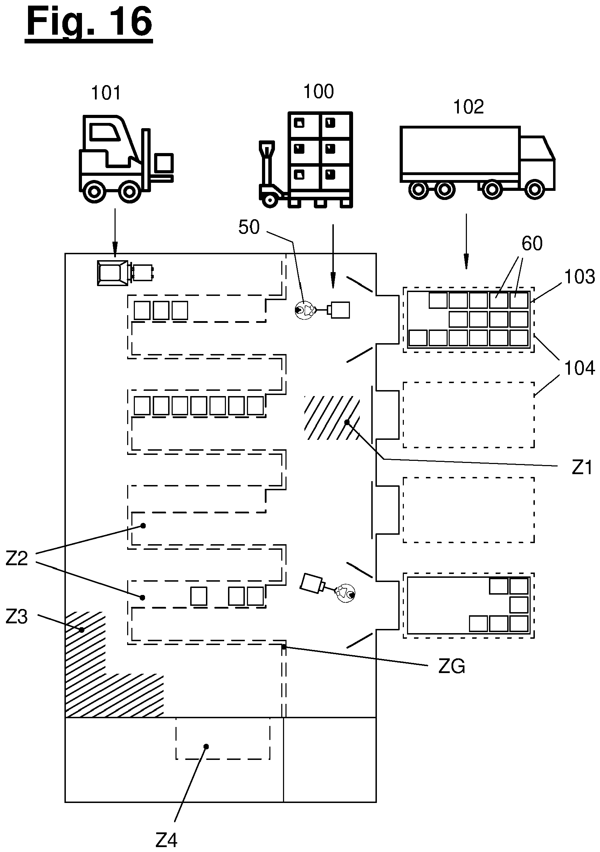

Figur 16 zeigt ein Logistik-System gemäß dem Stand der Technik in einer Draufsicht. Es umfasst einen Arbeitsbereich, in dem mehrere Ladungen (60) mit Waren zwischen Fernlogistik-Fahrzeugen (102) und einer Übergabezone (Z4) an eine Lager- oder Produktionseinrichtung transportiert werden sollen. Die Fernlogistik-Fahrzeuge (102) werden dazu an einer Warenannahmezone (104) abgestellt. Für den Transport der Ladungen sind zwei im Wesentlichen getrennte Teilsysteme vorgesehen. Einerseits gibt es Bedienpersonen (50), die mit manuell geführten Hubwagen (100) die Ladungen (60) jeweils einzeln zwischen einem Laderaum (103) eines Fernlogistik-Fahrzeugs (102) und eine Übergabebereich (105) hin und hier transportieren. Andererseits gibt es ein oder mehrere (Teil-)autonome Förderfahrzeuge (101), welche die Ladungen (60) von dem Übergabebereichen (105) weiter zu einer Übergabezone (Z4) an einer Lager- oder Produktionseinrichtung transportieren.

Die Bewegungsräume der Bedienpersonen (50) mit den manuell geführten Hubwagen (100), einerseits, und der (Teil-)autonomen Förderfahrzeuge (101), andererseits, sind in der Regel durch eine Zonengrenze (ZG) getrennt. Es gibt also einerseits eine manuelle Zone (Z1) und andererseits eine autonome oder Teilautonome Fahrzone (Z3). Der Übergabebereich (105) kann Bestandteil beider Zonen (Z1, Z3) sein, oder eine separate Umlade-Zone (Z2) bilden.

Das Logistiksystem gemäß diesem Stand der Technik hat verschiedene Nachteile. Zum einen ist das Bewegen der Ladungen (60) für die Bedienpersonen (50) mit relativ weiten Laufwegen verbunden und stellt eine hohe körperliche Belastung dar, selbst wenn die Hubwagen (100) eine Antriebsunterstützung aufweisen. Durch die Standzeiten der Ladungen im Übergabebereich (105) wird insgesamt eine hohe Durchlaufzeit für die Durchführung eines Wareneingangs oder Warenausgangs erzeugt. Durch die sehr hohe Anzahl an Ladungen, die während eines Tages in dem Logistik-System zu transportieren sind, entsteht für die Bedienpersonen (50) ein hoher mentaler Anforderungsgrad, was die Reihenfolge der Transportvorgänge und die Identifizierung der Ladungen mit dem jeweiligen Transportziel angeht. Hierdurch treten schnell Ermüdungserscheinungen auf, die zu fehlerhaften Transporten und/oder weiteren Standzeiten oder Nacharbeits-Zeiten führen können. Durch die Ermüdung steigt auch das Unfallrisiko.

Es ist Aufgabe der vorliegenden Erfindung, eine verbesserte Logistik- und Transporttechnik aufzuzeigen. Die Lösung der Aufgabe erfolgt durch die Merkmale der eigenständigen Ansprüche.

Die Logistik- und Transporttechnik gemäß der vorliegenden Offenbarung umfasst mehrere Aspekte, die jeweils für sich allein oder in einer beliebigen Kombination nutzbar sind und jeweils einzeln oder in Synergie einen Beitrag zur Lösung der vorgenannten Aufgabe leisten.

Nachfolgend werden der Begriffe "Aktion" und "Transport-Auftrag" als Bezeichnungen für maschinenlesbare Datenobjekte verwendet, die in einem automatisierten System, insbesondere in einer Logistik-Steuerung oder einer Steuerung eines Transportroboters verarbeitet werden. Der Begriff "Aktivität" bezieht sich allgemein auf die logische Gliederung von Transporttätigkeiten, unabhängig von der technischen Umsetzung. Im Rahmen der vorliegenden Offenbarung werden Aktivitäten, die im Rahmen des Transports von Ladungen erforderlich sind, durch Transport-Aufträge und Aktionen in einer maschinenlesbaren und digital verarbeitbaren Form gegliedert und verarbeitet.

Ein erster Aspekt der vorliegenden Offenbarung umfasst einen Transportroboter zur Beförderung einer Ladung. Der Transportroboter umfasst eine Bewegungsplattform, einen Ladungsaufnahmebereich, eine Antriebseinrichtung, eine Steuerung und eine Fremdsteuer-Schnittstelle. Die Fremdsteuer-Schnittstelle ist dazu ausgebildet, eine externe Eingabe zu empfangen. Die Steuerung ist dazu ausgebildet, die Antriebseinrichtung des Transportroboters zweitweise im Rahmen eines Eigen-Steuermodus auf Basis autonom erzeugter Kursvorgaben anzusteuern und zeitweise im Rahmen eines Fremd-Steuermodus auf Basis von Kursvorgaben anzusteuern, die gemäß der externen Eingabe erzeugt sind.

Die Steuerung ist weiterhin dazu ausgebildet, eine Aktionsfolge zu verarbeiten, die eine Mehrzahl von Aktionen zur Erfüllung eines

Transportauftrags in einer vorgesehenen Reihenfolge umfasst. Eine Aktion ist ein maschinenlesbares Datenobjekt und definiert einen Soll-Zustand zum Ende der Aktion als Ziel-Zustand. Weiterhin kann eine Aktion einen Soll-Zustand des Transportroboters zu Beginn der Aktion als einen Anfangs-Zustand definieren. Jeder Soll-Zustand umfasst bevorzugt zumindest eine Soll-Position und/oder einen Soll-Beladungs-Zustand.

Die Aktionen in der Aktionsfolge umfassen ferner mindestens zwei unterschiedliche Aktions-Arten:
▪ eine autonome Eigen-Aktion, die vorsieht, dass der Transportroboter im Eigen-Steuermodus tätig wird, um autonom in den jeweiligen Ziel-Zustand zu gelangen, insbesondere ausgehend von dem von dem jeweiligen Anfangs-Zustand oder dem momentanen Ist-Zustand; UND
▪ eine kollaborative Interaktion, bei der der Transportroboter eine externe Eingabe von einer Bedienperson anfordert und im Fremd-Steuermodus gemäß der externen Eingabe tätig wird.

Ein Transportroboter gemäß dem vorstehenden Aspekt hat verschiedene Vorteile. Durch die Definition und Verarbeitung einer Aktionsfolge kann der vollständige Transportvorgang zwischen dem Laderaum eines Fernlogistik-Fahrzeugs und einem weiteren Belade-Ort / Entlade-Ort in der Steuerung des Transportroboters abgebildet und umgesetzt werden. Planerische und organisatorische Aktivitäten können somit vollständig in der Steuerung des Transportroboters abgebildet werden, sodass eine Bedienperson hiervon befreit ist.

Weiterhin kann der Transportroboter durch die geplante Hinzuziehung einer Bedienperson für die Durchführung einer kollaborativen Interaktion auch in solchen Teilen des Arbeitsbereichs genutzt werden, die bisher als manuelle Zone (Z1) reserviert waren. Im Ergebnis bedarf es also weder einer Zonentrennung noch der Bildung von Übergabebereichen.

Durch die Definition der mindestens zwei Aktions-Arten können die autonom ausführbaren Aufgabenteile und die mit Unterstützung durch eine Bedienperson auszuführenden Aufgabenteile als durchgehende Handlungskette geplant und ausgeführt werden und zwar mit demselben Transportroboter. Die Bedienpersonen (50) können dabei für solche Tätigkeiten hinzugezogen werden, bei denen die menschliche Intelligenz der künstlichen Intelligenz überlegen ist. Dazu zählen insbesondere das Identifizieren von Ladungen und Ladungsträgern, das Bedienen in Bereichen, in denen besondere Sicherheitsanforderungen gelten, insbesondere innerhalb eines Laderaums eines Fernlogistik-Fahrzeugs, das Erkennen von unvorhergesehenen Situationen und Auswählen von geeigneter Lösungs- und Handlungsschritte, um den Transportroboter wieder in eine sichere und für ihn selbst kontrollierbare Situation zu bringen.

Ein weiterer Aspekt der vorliegenden Erfindung betrifft ein Logistiksystem zur Beförderung von Ladungen in einem definierten Arbeitsbereich, wobei das Logistiksystem mindestens einen Transportroboter und eine Logistiksteuerung umfasst. Der Transportroboter kann gemäß dem ersten Aspekt der Offenbarung ausgebildet sein oder eine andere Ausbildung haben.

Die Logistiksteuerung ist dazu ausgebildet, eine Mehrzahl von bevorstehenden Wareneingängen und/oder Warenausgängen zu erfassen. Einem Wareneingang oder Warenausgang ist bevorzugt jeweils ein Belade-Ort und/oder ein Entlade-Ort in dem Arbeitsbereich zugeordnet, der geeignet ist, um die betroffene Ware für die Erfüllung des bevorstehenden Wareneingangs oder Warenausgangs zu transportieren. Alternativ oder zusätzlich kann die Logistiksteuerung dazu ausgebildet sein, für einen bevorstehenden Wareneingang oder Warenausgang einen geeigneten Belade-Ort und/oder Entlade-Ort zu bestimmen und zuzuordnen.

Die Logistiksteuerung ist weiterhin dazu ausgebildet, mindestens einen Transport-Auftrag als maschinenlesbares Datenobjekt zu definieren, wobei der Transport-Auftrag
▪ die betroffene Ware einer Ladung zuordnet und
▪ die Abholung der Ladung von dem Belade-Ort und/oder die Lieferung der Ladung an den Entlade-Ort definiert.

Die Logistiksteuerung ist bevorzugt dazu ausgebildet, einen Transportroboter für die Durchführung eines Transport-Auftrags zu bestimmen. Die Bestimmung kann auf beliebige Weise erfolgen. Bevorzugt umfasst die Logistiksteuerung einen Satz von Auswahlregeln für die Bestimmung eines oder mehrerer Transportroboter. Solche Auswahlregeln können Vorgaben umfassen betreffend:
▪ Einen momentanen Zustand des Transportroboters oder der Transportroboter;
▪ Eine momentane Entfernung des Transportroboters oder der Transportroboter zum nächsten Entlade-Ort oder Belade-Ort;
▪ Eine Anzahl bereits vorrangig zugeordneter Transport-Auftrage des Transportroboters oder der Transportroboter.

Mit anderen Worten ist die Logistiksteuerung bevorzugt dazu ausgebildet, als Flottenmanager einerseits eine Menge von Transport-Aufträgen und andererseits eine Menge von Transportrobotern zu verwalten. Die Logistiksteuerung kann darüber hinaus als ein Lagerverwaltungs-System tätig sein oder mit einem Lagerverwaltungs-System verbunden sein. Die Logistiksteuerung kann in diesem Fall eine Mehrzahl von Wareneingängen und/oder Warenausgängen verwalten und geeignete Entlade-Orte oder Belade-Orte für die Durchführung der Wareneingänge und/oder Warenausgänge bestimmen.

Ein Wareneingang kann bspw. vorsehen, dass eine bestimmte Anzahl von Waren zu einem bestimmten Zeitpunkt an einem bestimmten Dock des Arbeitsbereichs in einem Fernlogistik-Fahrzeug angeliefert werden wird. Ein Warenausgang kann bspw. vorsehen, dass eine bestimmte Anzahl von Waren zu einem bestimmten Zeitpunkt an einem bestimmten Dock des Arbeitsbereichs von einem Fernlogistik-Fahrzeug abgeholt werden wird. Das Lagerverwaltungs-System, insbesondere die Logistiksteuerung, kann für einen Wareneingang einen (weiteren internen) Entlade-Ort bestimmten, zu dem eine oder mehrere der Waren transportiert werden sollen, bspw. eine Übergabezone an Lager- oder Produktionseinrichtung. Das Lagerverwaltungs-System, insbesondere die Logistiksteuerung, kann andererseits für einen Warenausgang einen (weiteren internen) Belade-Ort bestimmen, von dem eine oder mehrere der Waren abgeholt werden soll, bspw. eine Übergabezone an Lager- oder Produktionseinrichtung. Es ist andererseits möglich, dass ein Wareneingang und ein Warenausgang direkt miteinander gekoppelt sind und vorsehen, dass eine bestimmte Anzahl von Waren einerseits zu einem bestimmten Zeitpunkt an einem bestimmten Dock des Arbeitsbereichs in einem Fernlogistik-Fahrzeug angeliefert werden und andererseits zu einem bestimmten Zeitpunkt an einem bestimmten Dock des Arbeitsbereichs von einem Fernlogistik-Fahrzeug abgeholt werden wird, wobei ein Direkt-Transport zwischen diesen Docks bzw. den dortigen Fernlogistik-Fahrzeugen erfolgen soll.

Die Logistiksteuerung und/oder der Transportroboter sind ferner dazu ausgebildet, eine Aktionsfolge zu planen, die eine Mehrzahl von Aktionen zur Erfüllung eines Transportauftrags in einer vorgesehenen Reihenfolge umfasst, wobei eine Aktion als maschinenlesbares Datenobjekt vorliegt einen Soll-Zustand am Ende der Aktion als Ziel-Zustand vorsieht und bevorzugt auch einen Soll-Zustand des Transportroboters zu Beginn der Aktion als Anfangs-Zustand. Ein Soll-Zustand kann zumindest eine Soll-Position und/oder einen Soll-Beladungs-Zustand umfassen.

Die Ausbildung des Transportroboters und/oder der Logistiksteuerung ist ferner derart ausgebildet, dass die Aktionen in der Aktionsfolge als eine Zusammenstellung aus mind. zwei unterschiedlichen Aktions-Arten geplant werden:
▪ Einer autonomen Eigen-Aktion, die vorsieht, dass der Transportroboter in einem Eigen-Steuermodus tätig wird, um selbststätig von dem Anfangs-Zustand in den Ziel-Zustand zu gelangen; UND
▪ Eine kollaborative Interaktion, bei der der Transportroboter eine externe Eingabe von einer Bedienperson anfordert und in einem Fremd-Steuermodus gemäß dieser externen Eingabe tätig wird.

Ein nochmals weiterer Aspekt der vorliegenden Offenbarung betrifft ein Steuerverfahren für einen Transportroboter. Der Transportroboter umfasst eine Bewegungsplattform, einen Ladungsaufnahmebereich, eine Antriebseinrichtung und eine Fremdsteuer-Schnittstelle. Das Steuerverfahren umfasst zumindest die nachfolgenden Abschnitte und Schritte, die in der angegebenen oder einer beliebigen anderen Reihenfolge ausführbar sind, insbesondere in einer iterativen Ausführung:
Einen Aktions-Steuerabschnitt, der
▪ eine Aktionsfolge verarbeitet, die eine Mehrzahl von Aktionen zur Erfüllung eines Transportauftrags in einer vorgesehenen Reihenfolge umfasst, wobei eine Aktion ein maschinenlesbares Datenobjekt ist und einen Soll-Zustand des Transportroboters zum Ende der Aktion als Ziel-Zustand vorsieht und bevorzugt einen Soll-Zustand zu Beginn der Aktion als Anfangs-Zustand. Bevorzugt kann ein und insbesondere jeder Soll-Zustand zumindest eine Soll-Position und/oder einen Soll-Beladungs-Zustand umfassen. Die Aktionen in der Aktionsfolge umfassen mind. zwei unterschiedliche Aktions-Arten: Eine autonome Eigen-Aktion und eine kollaborative Interaktion; und
▪ auf Basis einer Zustandsauswertung über die Soll-Zustände gemäß den Aktionen und dem Ist-Zustand des Transportroboters Handlungsvorgaben erzeugt.

Einen Plattform-Steuerabschnitt, der eine Handlungsvorgabe empfängt und
▪ im Falle einer Handlungsvorgabe für die Umsetzung einer autonomen Eigen-Aktion: Einen Eigensteuermodus aktiviert und eine Kurs-Vergabe berechnet, die dazu geeignet ist, den Transportroboter in den Ziel-Zustand zu überführen;
▪ im Falle einer Handlungsvorgabe für die Umsetzung einer kollaborativen Interaktion: Eine Kollaborations-Anforderung ausgibt, einen Fremd-Steuermodus aktiviert und eine Kurs-Vorgabe auf Basis von Steuerbefehlen erzeugt, die gemäß einer externen Eingabe über eine Fremdsteuerschnittstelle empfangen werden.

Einen Fahrantrieb-Steuerabschnitt, der eine Kurs-Vorgabe empfängt und darauf basierend die Antriebseinrichtung des Transportroboters steuert.

Ein nochmals weiterer Aspekt der vorliegenden Offenbarung betrifft ein Steuerverfahren für ein Logistik-System. Das Logistik-System umfasst mindestens einen Transportroboter und bevorzugt eine Mehrzahl von Transportrobotern in einem Arbeitsbereich. Das Steuerverfahren umfasst:
Einen Transport-Planungsabschnitt, der
▪ mindestens einen bevorstehenden Wareneingang oder Warenausgang erfasst, wobei für den bevorstehenden Wareneingang oder Warenausgang mindestens ein Belade-Ort und/oder ein Entlade-Ort in dem Arbeitsbereich bestimmt ist, der geeignet ist, um die betroffene Ware für die Erfüllung des bevorstehenden Wareneingangs oder Warenausgangs zu transportieren, und
▪ mind. Einen Transport-Auftrag definiert, wobei der Transport-Auftrag ein maschinenlesbares Datenobjekt ist und die zugehörige Ware einer Ladung zuordnet, und weiterhin die Abholung einer Ladung von dem ermittelten Belade-Ort und/oder die Lieferung einer Ladung an den ermittelten Entlade-Ort definiert.

Einen Aktions-Planungsabschnitt, der
▪ mind. Einen Transport-Auftrag empfängt und eine Aktionsfolge plant, der dazu geeignet ist, den Transport-Auftrag zu erfüllen.

Die Aktionen in der Aktionsfolge AS sind aus mind. Zwei unterschiedlichen Aktions-Arten definierbar:
▪ Einer autonomen Eigen-Aktion, die vorsieht, dass der Transportroboter in einem Eigen-Steuermodus tätig wird, und
▪ einer kollaborativen Interaktion, die vorsieht, dass der Transportroboter eine externe Eingabe von einer Bedienperson anfordert und in einem Fremd-Steuermodus tätig wird.

Ein nochmals weiterer Aspekt der vorliegenden Offenbarung betrifft einen Lastaufnahme-Mechanismus für ein Flurförderfahrzeug, insbesondere für einen Transportroboter. Der Lastaufnahme-Mechanismus umfasst einen Gabelträger mit einer ersten Gabelzinke und einer zweiten Gabelzinke und eine Gabelantriebsvorrichtung. Die Gabelträgerführung ermöglicht eine Bewegung des Gabelträgers in einer zweiten horizontalen Richtung, die parallel zu den Gabelzinken verläuft.

Der Lastaufnahme-Mechanismus weist ferner eine Hubeinrichtung mit mindestens einem ein- und ausfahrbaren Stützmittel auf. Das Stützmittel ist dazu ausgebildet, im ausgefahrenen Zustand an einem distalen Abschnitt mindestens einer Gabelzinke eine Kraftabstützung gegenüber dem Untergrund herzustellen und im eingefahrenen Zustand vom Untergrund entfernt zu sein/werden.

Ein Lastaufnahme-Mechanismus gemäß der vorgenannten Ausbildung gestattet es, das Gewicht einer aufzunehmenden Ladung zeitweise im Bereich der distalen Enden der Gabelzinken am Boden abzustützen und auch mittels dieser Abstützkraft anzuheben. Auf diese Weise wird das Kippmoment, das durch die aufzunehmende Ladung auf das Flurförderfahrzeug oder den Transportroboter im ausgefahrenen Zustand des Gabelträgers ausgewirkt wird, erheblich reduziert bzw. wird eine zusätzliche in Vertikalrichtung wirkende Stützkraft an den distalen Enden der Gabelzinken zeitweise bereitgestellt, die ein nach vorne Überkippen des Flurförderfahrzeugs oder Transportroboters verhindert.

Auf diese Weise kann das Flurförderfahrzeug oder der Transportroboter mit einem deutlich geringeren Gewicht ausgebildet werden, weil der dorsale Abschnitt des Flurförderfahrzeugs oder Transportroboters nicht als Gegengewicht zu der aufzunehmenden Ladung dienen muss.

Somit kann ein Flurförderfahrzeug oder Transportroboter gebildet werden, das ähnliche Traglasten erreicht, wie ein in der Praxis bekannter Gabelstapler, jedoch so leicht ist, dass es auch im Laderaum eines Fernlogistik-Fahrzeugs genutzt werden kann.

Bevorzugt umfasst der Lastaufnahme-Mechanismus weiterhin eine Gabelträgerführung. Die Gabelträgerführung ist bevorzugt in einer zweiten Horizontalrichtung, die quer zu den Gabelzinken verläuft, zwischen oder neben den Gabelzinken angeordnet ist.

Der Lastaufnahme-Mechanismus kann bevorzugt mittels der Gabelantriebsvorrichtung und/oder der Gabelträgerführung an einem Transportroboter, insbesondere an einer Bewegungsplattform eines Transportroboters angeordnet sein.

Die vorliegende Offenbarung umfasst einen Transportroboter mit einer Bewegungsplattform und einem Lastaufnahme-Mechanismus gemäß dem vorgenannten Aspekt, wobei der Transportroboter weiterhin eine Ausbildung nach dem ersten Aspekt oder eine beliebige andere Ausbildung haben kann.

Der Transportroboter kann insbesondere bevorzugt eine Steuerung mit einem Eigen-Steuermodus und einem Fremd-Steuermodus umfassen. Der Lastaufnahme-Mechanismus kann im Eigen-Steuermodus auf Basis einer autonomen Eigen-Aktion selbsttätig gesteuert werden und im Fremd-Steuermodus auf Basis einer externen Eingabe gesteuert werden, die über eine Fremdsteuerungs-Schnittstelle des Transportroboters oder des Lastaufnahme-Mechanismus empfangen wird. Ein weiterer Aspekt der vorliegenden Offenbarung betrifft ein Lastaufnahmeverfahren. Das Lastaufnahmeverfahren kann bevorzugt durch eine Steuerung des Transportroboters oder des Lastaufnahme-Mechanismus ausgeführt werden. Es umfasst bevorzugt die folgenden Schritte:
▪ In einem Zustand, in welchem der Gabelträger an einer aufzunehmenden Ladung vorpositioniert ist, sodass die distalen Enden der Gabelzinken vor mindestens einem Kanal angeordnet sind, der innerhalb oder unterhalb der aufzunehmenden Ladung verläuft:
   ▪ Ausfahren des Gabelträgers entlang einer ersten Horizontalrichtung (x), die parallel zu den Gabelzinken verläuft, sodass die Gabelzinken den mindestens einen Kanal durchgreifen. Expansions-Betätigung der Hubeinrichtung, sodass das Stützmittel in einen ausgefahrenen Zustand übergeht, in welchem es auf den Untergrund abgestützt ist, und Anheben des Gabelträgers in einer vertikalen Richtung, sodass die Ladung auf den Gabelträger aufgenommen und vom Untergrund abgehoben wird.
   ▪ Einfahren des Gabelträgers in der ersten Horizontalrichtung unter Mitnahme der aufliegenden Ladung entgegen einer dorsalen Endposition.
   ▪ Kontraktions-Betätigung der Hubeinrichtung, sodass das Stützmittel in einen eingefahrenen Zustand übergeht, in welchen die Abstützung auf dem Untergrund aufgehoben ist.

Die vorliegende Offenbarung umfasst auch jeweils ein Computerprogrammprodukt, das auf einem Datenträger gespeichert oder über eine Datenschnittstelle empfangen ist, wobei das Computerprogrammprodukt auf einer Datenverarbeitungseinrichtung ausführbar ist und Anweisungen enthält, die dazu geeignet sind, bei der Ausführung ein Steuerverfahren oder ein Lastaufahmeverfahren gemäß der vorliegenden Offenbarung durchzuführen.

Weiterhin umfasst die vorliegende Offenbarung eine Datenverarbeitungseinrichtung für einen Transportroboter und/oder für ein Logistiksystem und/oder für einen Lastaufnahme-Mechanismus gemäß einem Aspekt der vorliegenden Offenbarung, wobei die Datenverarbeitungseinrichtung dazu ausgebildet ist, ein Steuerverfahren oder ein Lastaufnahmeverfahren gemäß der vorliegenden Offenbarung durchzuführen.

Weitere vorteilhafte Ausgestaltungen der vorliegenden Erfindung sind in der nachfolgenden detaillierten Beschreibung, den beigefügten Zeichnungen und den Unteransprüchen angegeben.

Die Erfindung ist in den Zeichnungen beispielhaft und schematisch dargestellt. Diese zeigen:
- Figur 1:: ein Logistik-System mit einem Transportroboter und einer Logistiksteuerung im Schrägbild;
- Figur 2:: eine schematische Draufsicht auf eine Szene, die einen Arbeitsvorgang zur Erfüllung einer Transportaufgabe erläutert, die mit einer Folge von autonomen Eigen-Aktionen, einer geplanten kollaborativen Interaktion und einer intervenierende Fremdsteuerung umgesetzt wird;
- Figur 3:: eine Ablaufillustration für die Verarbeitung einer Aktionsfolge mit zwei autonomen Eigen-Aktionen, einer kollaborativen Interaktion und einer externen Intervention während einer autonomen Eigen-Aktion;
- Figur 4:: eine perspektivische Darstellung des Einsatzes von Transportrobotern im Laderaum eines Fernlogistik-Fahrzeugs;
- Figur 5:: eine schematische Darstellung einer Logistik-Steuerung und eines zugehörigen Steuerverfahrens mit einem Transport-Planungsabschnitt in Zusammenwirken mit einem Lagerverwaltungs-System;
- Figur 6:: eine schematische Darstellung der Arbeitsweise eines Aktions-Planungsabschnitts zur Erzeugung von Aktionsfolgen für die Erfüllung von Transportaufträgen;
- Figur 7:: eine schematische Darstellung einer Steuerung für einen Transportroboter und eines zugehörigen Steuerverfahrens mit einem Aktions-Steuerabschnitt und einem Plattform-Steuerabschnitt;
- Figur 8:: eine Seitenansicht eines Transportroboters mit einer bevorzugten Ausführungsform eines Lastaufnahme-Mechanismus;
- Figur 9:: eine Untersicht des Transportroboters von Figur 1;
- Figuren 10A-D:: Seitenansichten des Transportroboters von Figuren 8 und 9 zur Illustration eines Lastaufnahmeverfahrens in vier Ablaufschritten;
- Figur 11:: eine Seitenansicht eines Transportroboters während der Durchführung eines Lastaufnahmeverfahrens bei der Aufnahme eines Ladungsträgers in einer ersten Möglichkeit für die Einführung der Gabelzinken;
- Figur 12:: eine Darstellung analog zu Figur 12 in einer zweiten Möglichkeit für die Einführung der Gabelzinken;
- Figuren 13 u. 14:: Schrägbilddarstellungen von zwei bevorzugten Ausführungsvarianten von omnidirektionalen Antriebseinheiten für einen Transportroboter;
- Figur 15:: eine schematische Draufsicht auf ein Logistik-System gemäß der vorliegenden Offenbarung;
- Figur 16:: eine schematische Draufsicht auf ein Logistik-System gemäß dem Stand der Technik.

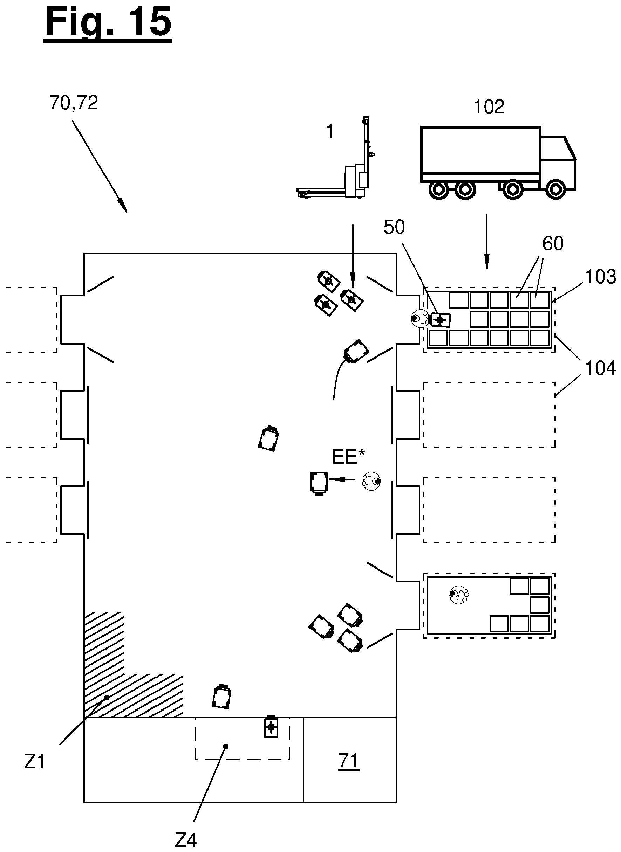

Ein Logistik-System gemäß der vorliegenden Offenbarung ist in Figur 15 dargestellt. Es umfasst einen Arbeitsbereich und mindestens einen, bevorzugt eine Mehrzahl von Transportrobotern (1). Die Transportroboter sind gemäß einem Aspekt der vorliegenden Offenbarung ausgebildet und haben eine Steuerung, die zeitweise im Rahmen eines Eigen-Steuermodus (STE) autonom Kursvorgaben (KV) erzeugt und damit die Antriebseinrichtung (12) des jeweiligen Transportroboters (1) ansteuert. Andererseits kann die Steuerung im Rahmen eines Fremd-Steuermodus (STF) die Antriebseinrichtung (12) auf Basis von Kursvorgaben (KV) ansteuern, die gemäß einer externen Eingabe (EE,EE*) erzeugt sind, welche über eine Fremdsteuer-Schnittstelle (21) des Transportroboters (1) empfangen wird.

Die Transportroboter (1) können sich im Wesentlichen frei in dem Arbeitsbereich (72) bewegen.

Der Arbeitsbereich (72) kann eine beliebige Ausbildung haben. Es kann sich beispielsweise um die Bodenfläche eines Logistik-Zentrums handeln, die anteilig innerhalb oder außerhalb eines oder mehrerer Gebäude liegen kann. Bevorzugt ist der Arbeitsbereich (72) für die verschiedenen Steuersysteme gemäß der vorliegenden Offenbarung durch eine digitale Karte bekannt, so dass eine Lokalisierung der Transportroboter (1) sowie der Waren (60) in dem Arbeitsbereich (72) möglich ist.

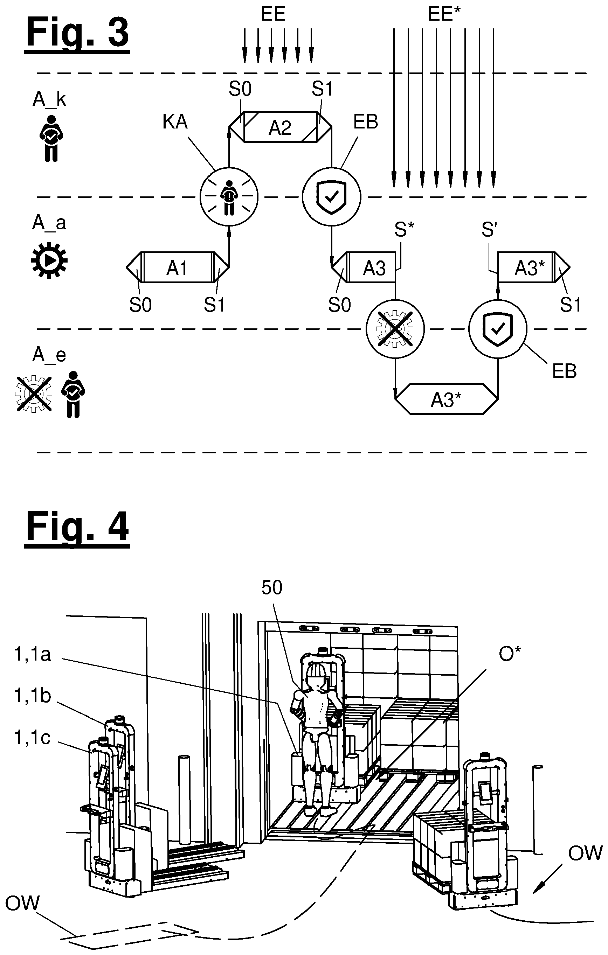

Der Arbeitsbereich (72) kann sich auch in den Ladungsraum (103) eines Fernlogistik-Fahrzeugs (102) erstrecken, das ggf. zeitweise an einem geeigneten Dock (104), insbesondere einer Warenannahmezone steht. Rechts oben in dem Arbeitsbereich (72) von Figur 15 ist ein Be- oder Entladevorgang illustriert, bei dem mind. ein Transportroboter (1) und eine Bedienperson (50) den Laderaum (103) betreten. Figur 4 zeigt eine Schrägbildansicht dieser Situation mit Blick in den Laderaum (103). Es wird beispielhaft angenommen, dass ein Transportauftrag (LT), bei dessen Durchführung die oben rechts in Figur 15 sowie in Figur 4 gezeigte Situation auftritt, eine Kette von Aktivitäten umfasst, die ein autonomes Handeln von mind. einem Transportroboter (1) und eine geplante Interaktion mit zusammenwirken von Transportroboter (1) und Bedienperson (50) umfassen. Diese Aktivitäten werden in den Steuersystemen gemäß der vorliegenden Offenbarung durch maschinenlesbare Datenobjekte repräsentiert, so dass sie für die Durchführung und etwaige Re-Organisation der Aktivitäten durch eine oder mehrere Datenverarbeitungseinrichtungen zugänglich sind.

Ein Transportauftrag (LT) und eine Aktionsfolge (AF) stellen besonders wesentliche maschinenlesbare Datenobjekte dar, deren Erzeugung und Verarbeitung nachfolgend in größerer Detailtiefe erläutert wird.

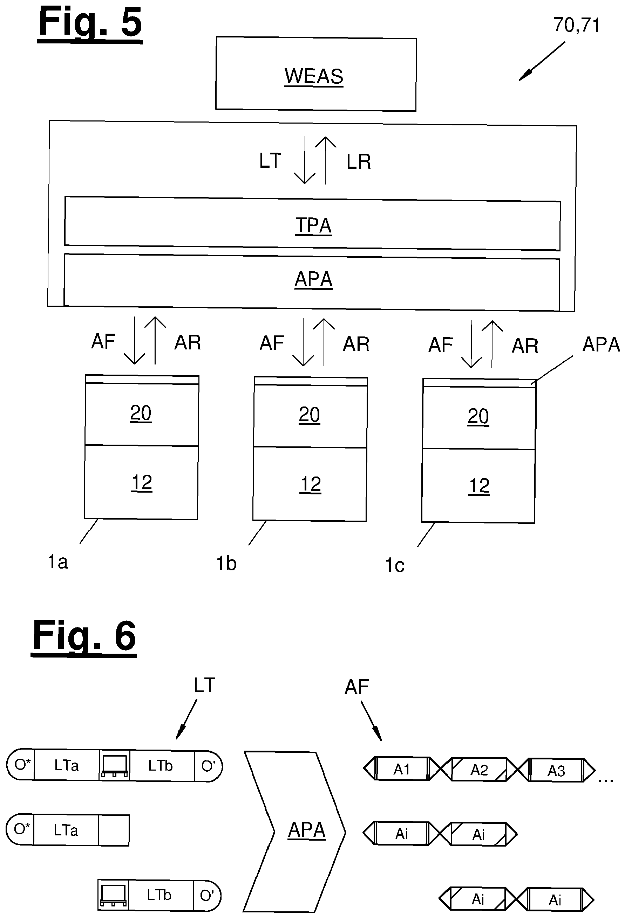

Figur 6 zeigt beispielhaft auf der linken Seite drei Varianten eines Transportauftrags (LT).

Der Transportauftrag (LT) in der obersten Zeile definiert, dass eine bestimmte Ladung (60) von einem Belade-Ort (O*) abgeholt und zu einem Entlade-Ort (O') geliefert werden soll.

Dieser Transportauftrag (LT) kann gemäß den darunter liegenden Zeilen in zwei Teile untergliedert werden, einerseits einen Abholungs-Auftrag (LTa) und andererseits einen Lieferungs-Auftrag (LTb). Der Abholungs-Auftrag (LTa) bestimmt somit, dass eine Ladung (60), die noch nicht spezifiziert ist, oder eine vorbestimmte Ladung (60) an einem Belade-Ort (O*) abgeholt werden soll. Ein Lieferungs-Auftrag (LTb) kann dementsprechend definieren, dass eine Ladung (60), die auf einem Transportroboter (1) aufgeladen und bevorzugt als eine bestimmte Ladung (60) erkannt ist, zu einem Entlade-Ort (O') geliefert wird.

Ein Transportauftrag (LT) kann für eine vollständige Durchführung aus der Sicht eines Transportroboters (1) beispielsweise folgende Teil-Aktivitäten umfassen, die durch zugehörige Aktionen (Ai) in einer Aktionsfolge (AF) als maschinenlesbare Datenobjekte wiedergebbar sind:
▪ Anfahrt zum spezifizierten Belade-Ort (O*), Position zu Beginn der Aktion: Momentaner Aufenthaltsort des Transportroboters (1), beispielsweise Ladestation für elektrisches Aufladen, oder anderer spezifizierter Start-Ort; Ziel-Ort: eine grob oder detailliert vorbestimmbare Position am Belade-Ort (O*);
▪ Vorpositionierung an Ladung: Start-Ort = Ziel-Ort der vorhergehenden Aktivität; Neuer Ziel-Ort =Adhoc zu bestimmende Position im Zugriffsbereich vor der aufzunehmenden Ladung (60), kann ggf. durch Bedienperson (50) genauer spezifiziert werden;
▪ Aufnehmen der Last: Start-Ort = Ziel-Ort der vorhergehenden Aktion; Ziel-Ort: Stabile Transportlage unter der angehobenen Ladung (kann mit Start-Position übereinstimmen oder davon abweichen, je nach Art des Beladungsvorgangs);
▪ Rangierfahrt: Start-Ort = Ziel-Ort der vorhergehenden Aktion; Ziel-Ort = Übergangsbereich zu einer Fahrzone mit freien und geräumigen Fahrwegen;
▪ Transportfahrt: Start-Ort = Ziel-Ort der vorhergehenden Aktion; Ziel-Ort: grob oder detailliert spezifizierte Position am Entlade-Ort (O');
▪ Vorpositionieren: Start-Ort = Ziel-Ort der vorhergehenden Aktion; Ziel-Ort: Abstellposition für die aufgenommene Ladung (60) oder eine Zugriffsposition davor (kann ggf. durch Bedienperson (50) spezifiziert werden);
▪ Abladevorgang: Start-Ort = Ziel-Ort der vorhergehenden Aktion; Ziel-Ort = Zugriffsposition neben Abstellort der Ladung (60);
▪ Rangierfahrt: Start-Ort = Ziel-Ort der vorhergehenden Aktion; Ziel-Ort = Übergangsbereich zu einer Fahrzone mit freien und geräumigen Fahrwegen;
▪ Einrückfahrt: Start-Ort = Ziel-Ort der vorhergehenden Aktion; Ziel-Ort = Ruhe-Position für Transportroboter (1) während Einsatzpause, beispielsweise Ladestation oder Bereitschafts-Stellplatz in verkehrsgünstiger Lage im Arbeitsbereich.

Alle vorgenannten Orte und Positionen können innerhalb des Arbeitsbereichs (72) lokalisiert werden. Der Arbeitsbereich kann sich dabei auch in einen Laderaum eines Fernlogistik-Fahrzeugs erstrecken.

Die Orte und Positionen können in einer beliebigen Form bestimmt sein. Es ist insbesondere möglich, die Orte in unterschiedlichem Detailierungsgrad zu bestimmen. Die Bestimmung / Spezifizierung eines Ortes oder einer Position kann bspw. qualitativ oder quantitativ vorbestimmt werden. Eine qualitative Bestimmung von Orten und Positionen gestattet eine ausreichende Detaillierung auf der Ebene der Planung von Transport-Aufträgen und Aktivitäten, um eine Vielzahl von Transportvorgängen in dem Arbeitsbereich zu koordinieren. Sie lässt andererseits genügend Freiraum, um "vor Ort" eine Feinplanung nach den örtlichen Gegebenheiten durchzuführen, die sich dynamisch verändern können. Andererseits lässt die qualitative Bestimmung zu oder sieht sogar vor, dass eine Auswahlentscheidung durch eine Bedienperson getroffen wird.

Eine qualitative Vorbestimmung kann beispielsweise lauten: "Zugriffsposition vor Ladung mit Ladungskennung (ABC 123)" oder "Freifläche mit mindestens 3 m Abstand zum Laderaum und 1 m Abstand zu vorgesehenem Hauptverkehrsweg". Solche qualitativen Vorbestimmungen können während der Ausführung des Transport-Auftrags bzw. einer Aktion noch durch eine weitere Tätigkeit innerhalb der Steuerung des Transportroboters oder durch eine Tätigkeit der Bedienperson weiter konkretisiert werden. So kann bspw. eine qualitative Ortsangabe wie "Zugriffsposition vor Ladung mit Ladungskennung ABC 123 während der Ausführung eines Transport-Auftrags auf dem Display eines Transportroboters angezeigt werden. Eine Bedienperson kann diese Information lesen, die Ladung mit Ladungskennung ABC 123 ausfindig machen, eine geeignete Zugriffsposition davor bestimmen und den Transportroboter derart steuern, dass er in diese Position gelangt. Andererseits kann beispielsweise die Definition einer "Freifläche mit mindestens 3 m Abstand zum Laderaum und 1 m Abstand zu vorgesehenem Hauptverkehrsweg" durch den ersten Transportroboter in einer Gruppe von Transportrobotern erfolgen, die gemeinsam zu einem Belade-Ort geschickt werden. Dieser erste Transportroboter kann mittels seiner Umfelderfassungsvorrichtung bestimmen, welche Freiflächenbereiche insgesamt vorliegen und einen Teil davon als diejenige Freifläche definieren, die dann als konkreter Ziel-Ort festgelegt wird.

Eine quantitative Festigung kann hingegen eine klare und genau spezifizierte Vorgabe bilden, die von den Transportrobotern und/oder Bedienpersonen einzuhalten ist, beispielsweise durch Angabe von Punktkoordinaten und/oder einer Soll-Orientierung im Arbeitsbereich (72). Quantitative Bestimmungen können bspw. dort sinnvoll sein, wo die Ladung an ein anderes automatisiertes System übergeben werden soll oder wo eine bestimmte Makro-Gliederung des Arbeitsbereichs (72) gewünscht ist. So kann beispielsweise für einen oder mehrere momentan untätige Transportroboter eine (gegebenenfalls temporäre und rein virtuell festgelegte) Haltezone definiert werden und zwar bevorzugt an einem Ort, der in absehbarer Zeit nicht für Fahrten oder Ladevorgänge benötigt wird, beispielsweise durch Definition einer temporär angelegten Standby-Zone als Ziel einer Einrückfahrt.

Die verschiedenen Aktivitäten und dazugehörigen Aktionen können dadurch separiert werden, dass jeweils an der Grenze zwischen zwei Aktionen eine Änderung der Position und/oder des Beladungszustands des Transportroboters (1) vorbestimmt ist. Während der Anfahrt, dem Vorpositionieren vor dem Aufladen, dem Rangieren nach dem Abladen und während der Einrückfahrt kann der Soll-Beladungszustand jeweils zu Beginn und Ende der Aktivität/Aktion definiert sein als: "Unbeladen". Während der Transportfahrt und der Vorpositionierung für das Abladen kann der Soll-Beladezustand definiert sein als: "Ladung aufgenommen". Für einen Beladevorgang kann der Soll-Beladungszustand zu Beginn definiert sein als: "Unbeladen" und der Soll-Beladungszustand zum Ende als: "Ladung aufgenommen". Dementsprechend umgekehrt können die Soll-Beladungszustände zu Beginn und Ende des Abladevorgangs definiert sein.

Es kann ausreichend sein, nur Ziel-Zustände zu definieren. Ferner kann es ausreichen sein, nur dann eine Soll-Position zu definieren, wenn sich diese während der durchzuführenden Aktion ändert, oder nur dann einen Soll-Beladungs-Zustand zu definieren, wenn sich dieser während der durchzuführenden Aktion ändert.

Für das Be- oder Entladen eine Mehrzahl von Waren, die einen bestimmten Wareneingang oder Warenausgang oder einer Gruppe von Wareneingängen oder Gruppe von Warenausgängen zugeordnet sind, können mehrere Ladungen zu transportieren sein. Beispielsweise kann eine Gruppe von Wareneingängen vorsehen, dass an einer bestimmten Warenannahmezone (104) insgesamt 260 Pakete ankommen, die als Kartons (61) verpackt und wiederum in Gruppen auf Ladungsträgern (62) zusammengefasst sind. Eine Ladung (60) besteht in diesem Fall jeweils aus (mindestens) einem Ladungsträger (62) mit den darauf angeordneten Kartons (61). Häufig wird bereits über ein Lagerverwaltungs-System bekannt sein, welche identifizierbaren Waren in welcher Form in einer ebenfalls identifizierbaren Ladung vorhanden sind, wobei insbesondere die Ladung (60) durch ein Identifikationsmittel wie einen Barcode, eine Sendungsnummer etc. gekennzeichnet sein kann. Es ist allerdings häufig unbekannt, in welcher Reihenfolge oder Verteilung die identifizierbaren Ladungen im Ladungsraum (103) eines Fernlogistik-Fahrzeugs (102) vorzufinden sind.

Um ein möglichst schnelles und damit effizientes Entladen und weiterhin einen möglichst effizienten Warenumschlag durchzuführen, kann es vorteilhaft sein, zunächst die Ladungen (60) in einer beliebigen Reihenfolge aus dem Ladungsraum (103) zu entnehmen und beispielsweise erst nach dem Ausfahren aus dem Ladungsraum (103) die Ladung zu identifizieren, die auf dem jeweiligen Transportroboter (1) aufgeladen worden ist. Eine solche Identifizierung kann insbesondere dann mit größerem Freiraum erfolgen, ohne dass das Vorpositionieren, Aufladen oder Rangieren eines anderen Transportroboters oder die Bewegungen von Bedienpersonen (50) behindert werden.

Gemäß den obenstehenden Erläuterungen kann es also vorteilhaft sein, auch eine aufzunehmende Ladung nur qualitativ oder auch quantitativ vorzubestimmen. Eine qualitative Vorbestimmung kann beispielsweise lauten: "Eine Palette aus Wareneingangsnummer HIJ 567". Eine quantitative Festlegung einer Ladung kann hingegen lauten: "Sendungsnummer ABK743928, erkennbar durch Paletten-Nummer ABC123".

Die Logistik- und Transporttechnik gemäß der vorliegenden Offenbarung ist dazu geeignet, sowohl den vollständigen Transportvorgang steuerungstechnisch abzubilden und eigenständig zu organisieren als auch die für die Durchführung dieser Transportaufträge vorzunehmenden Aktivitäten eigenständig in maschinenlesbare und autonom verarbeitbare Aktionen zu gliedern sowie die Transportaufträge auf einen oder mehrere Transportroboter (1) zu verteilen. Die Transportroboter (1) wiederum sind dazu ausgebildet, eine Aktionsfolge eigenständig zu verarbeiten, die einerseits für die Erfüllung eines zugehörigen Transportauftrags geeignet ist und andererseits darüber hinaus gehende Bestandteile umfassen kann, wie beispielsweise das Planen einer Anfahrt oder die Durchführung einer Einrückfahrt.

Die Logistik-Steuerung (71) und/oder die Steuerung (20) eines Transportroboters (1) umfasst einen Aktions-Planungsabschnitt (APA), der dazu ausgebildet ist, einen Transportauftrag (LT) zu empfangen, der als Daten-Objekt vorliegt und die Abholung einer Ladung (60) von einem Belade-Ort (O*) und/oder die Lieferung einer Ladung (60) an einen Entlade-Ort (O') definiert und weiterhin eine Aktionsfolge (AF) plant, die dazu geeignet ist, diesen Transport-Auftrag (LT) zu erfüllen. Es ist auch möglich, einen Aktions-Planungsabschnitt (APA) in beiden Steuerungen vorzusehen, also sowohl in der Logistiksteuerung (71) als auch in der Steuerung (20) des Transportroboters.

Figur 5 zeigt eine schematische Darstellung eines Logistik-Systems (70), das eine Logistiksteuerung (71) und eine Mehrzahl von Transportrobotern (1) in einem (hier nicht dargestellten) Arbeitsbereich (72) umfasst. Die Logistiksteuerung (71) erfasst eine Vielzahl von Waren mit jeweils zugeordneten momentanen Positionen und eine Mehrzahl von bevorstehenden Wareneingängen und/oder Warenausgängen. Die Wareneingänge und Warenausgänge werden bspw. von einem Lagerverwaltungs-System (WEAS) verwaltet. Das Lagerverwaltungs-System (WEAS) ist optional ebenfalls ein Bestandteil des Logistik-Systems (71).

Anhand der Figur 5 ist die Durchführung eines Steuerverfahrens für das Logistik-System (70) illustriert. Die Logistiksteuerung (71) erfasst einen Wareneingang oder Warenausgang. Erfassung kann auf beliebige Weise erfolgen. Bspw. kann eine Nachricht von einem Lagerverwaltungs-System (WEAS) empfangen werden. Alternativ kann ein Datensatz von einem Datenträger eingelesen werden oder es erfolgt eine Eingabe über eine Benutzerschnittstelle.

Die Logistiksteuerung (71) umfasst in dem gezeigten Beispiel einen Transport-Planungsabschnitt (TPA) und einen Aktions-Planungsabschnitt (APA). Der Transport-Planungsabschnitt (TPA) definiert einen Transport-Auftrag (LT), der die zugehörige Ware einer Ladung (60) zuordnet, und definiert weiter die Abholung (LTa) und/oder die Lieferung (LTb).

Der Transport-Planungsabschnitt (TPA) ermittelt gegebenenfalls für einen bevorstehenden Wareneingang oder Warenausgang ergänzend einen Belade-Ort (O*) und einen Entlade-Ort (O') in dem Arbeitsbereich (72). Der Wareneingang oder Warenausgang kann beispielsweise nur einen vorbestimmten Belade-Ort oder nur einen vorbestimmten Entlade-Ort umfassen, wobei der Transport-Planungsabschnitt (TPA) den jeweils anderen Ort ergänzt. Alternativ oder zusätzlich ist eine zeitversetzte Planung von Abholung (LTa) und (LTb) möglich. So kann ein Wareneingang bspw. nur angeben, dass eine bestimmte Ware zu einem bestimmten Zeitpunkt an einem bestimmten Bereich mit einem Fernlogistik-Fahrzeug (102) ankommen wird, wobei dieser Bereich als Belade-Ort (O*) definiert wird. Es kann aber noch offen sein, wohin die angelieferte Ware zu transportieren ist. Die Angabe eine Entlade-Ortes (O') kann zum Zeitpunkt der Erstplanung eines Transport-Auftrags (LT) offen gelassen werden. Bspw. kann zunächst nur ein Abhol-Auftrag (LTa) geplant werden, der den definierten Belade-Ort (O*) aus dem Wareneingang übernimmt. Zu einem späteren Zeitpunkt, bspw. wenn die Ladung auf einem Transportroboter (1) aufgenommen worden ist, kann der Transport-Planungsabschnitt (TPA) anfragen, was mit dieser Ladung (60) bzw. der enthaltenen Ware weiter geschehen soll und hierzu eine Transport-Rückmeldung (LR) an das Lagerverwaltungs-System (WEAS) übermitteln. Sobald ein Transport-Ziel bekannt ist kann ein zugehöriger Liefer-Auftrag (LTb) erzeugt werden, sodass nun der vollständige Transport-Auftrag (LT) definiert ist.

Figur 6 erläutert das Vorgehen des Aktions-Planungsabschnitt (APA). Der Aktions-Planungsabschnitt (APA) empfängt mindestens einen Transport-Auftrag (LT, LTa, LTb) und plant eine Aktionsfolge (AF), die dazu geeignet ist, den Transport-Auftrag (LT) zu erfüllen. Der Transport-Auftrag (LT) kann ein reiner Abhol-Auftrag (LTa), ein reiner Liefer-Auftrag (LTb) oder ein kombinierter Abhol-und-Liefer-Auftrag sein.

Im Rahmen der vorliegenden Offenbarung sind für die Planung einer Aktionsfolge (AF) mindestens zwei unterschiedliche Aktions-Arten definierbar, nämlich einerseits eine autonome Eigen-Aktion (A_e), die vorsieht, dass der Transportroboter (1) in einem Eigen-Steuermodus (STE) tätig wird, und andererseits eine kollaborative Interaktion (A_k), die vorsieht, dass der Transportroboter (1) eine externe Eingabe (EE) von einer Bedienperson (50) anfordert (KA) und in einem Fremd-Steuermodus (STF) tätig wird.

Die Planung von autonomen Eigen-Aktionen ist für diejenigen Aktivitäten geeignet und sinnvoll, die ein autonomer Transportroboter (1) erfahrungsgemäß ohne Probleme schnell und effizient bewältigen kann. Dazu zählen beispielsweise die Planung und Durchführung der Anfahrt, der Transport einer aufgenommenen Ladung zwischen Belade-Ort und Enlade-Ort und die Einrückfahrt. Auch das reine Aufnehmen einer Ladung (60) durch Betätigen eines Lastaufnahme-Mechanismus (30), wenn der Transportroboter (1) bereits in einer geeignete Zugriffsposition ist, kann eine autonome Eigen-Aktion sein.

Die Planung einer kollaborativen Interaktion kann beispielsweise für solche Aktivitäten vorgesehen sein, bei denen autonome Roboter erfahrungsgemäß mit für sie unbekannten situativen Bedingungen konfrontiert werden, die sie mit ihrer künstlichen Intelligenz (noch) nicht oder nur mit einer mäßigen Effizienz durchführen können. Dazu zählen insbesondere die Erkennung und das Lokalisieren einer (bestimmten) Ladung oder eines (bestimmten) Ladungsträgers (61), das Vorpositionieren des Transportroboters (1) vor einem solchen Ladungsträger (61) sowie das Rangieren in unbekannten oder fremdkontrollierten Räumen, insbesondere im Ladungsraum (103) eines Fernlogistik-Fahrzeugs (102). Es kann auch sein, dass das Fernlogistik-Fahrzeug (102) nicht der Kontrolle und/oder den organisatorischen Vorgaben des Betreibers des Logistik-Systems unterliegt oder unterworfen werden kann und dass rein aus diesem Grund ein autonomes Tätigwerden eines Transportroboters (1) im Laderaum (103) nicht zugelassen werden soll. Typische Beispiele für Aktivitäten, die mit Hilfe einer Bedienperson (50) durchgeführt werden sollten, und dementsprechend zugeordnete Aktionen sind also das Vorpositionieren des Transportroboters im Zugriffsbereich einer (etwaig noch nicht identifizierten) Ladung im Laderaum (103) sowie eine Rangierfahrt. Die Unterstützung einer Bedienperson (50) beim Rangieren kann hilfreich sein, um den Transportroboter (1) schnell und auf einem günstig gewählten Fahrtweg aus dem Laderaum (103) zu entfernen, ohne die Tätigkeit anderer Transportroboter (1) oder Bedienpersonen (50) übergebührlich zu stören.

Durch die Bereitstellung von mindestens zwei Aktions-Arten für die Planung der Aktionsfolge (AF) kann sichergestellt werden, dass auf der Gesamtorganisationsebene für die Durchführung eines Transport-Auftrags (LT) und insbesondere für die Durchführung einer großen Anzahl solcher Transport-Aufträge (LT) ein vollständiges digitales Abbild vorliegt. Gleichzeitig können ein oder mehrere Bedienpersonen (50) für die effiziente Durchführung der schwierigen Positionier- und Identifizierungsaufgaben innerhalb des Transport-Auftrags (LT) hinzugezogen werden.

Auf diese Weise wird also ein Logistik-System geschaffen, das die besonderen Vorzüge der menschlichen Intelligenz und der künstlichen Intelligenz sowie der geistigen und physischen Belastbarkeit von technischen Systemen und Menschen in einer besonders günstigen Weise kombiniert. Im Ergebnis kann der Warenumschlag in einem Logistik-System mit einer massiven Effizienzsteigerung und gleichzeitig mit einer deutlichen Verringerung der Zählerrate durchgeführt werden.

Die Antriebseinrichtung (12) des Transportroboters (1) kann grundsätzlich beliebig ausgebildet sein. Es hat allerdings besondere Vorteile, wenn die Antriebseinrichtung als omnidirektionale Antriebseinrichtung ausgebildet ist, d.h. dazu geeignet ist, eine omnidirektionale Bewegung in der Ebene auszuführen.

Eine omnidirektionale Bewegung in der Ebene umfasst drei Freiheitsgrade:
▪ Eine Translation in einer ersten Horizontalrichtung (x), insbesondere Vorwärts-Rückwärts-Richtung.
▪ Eine Translation in einer zweiten Horizontalrichtung (y), die zur ersten Horizontalrichtung (x) unterschiedlich und bevorzugt orthogonal ist, bevorzugt Seitwärts- Richtung;
▪ Eine Rotation um eine Hochachse.

Eine omnidirektionale Antriebseinrichtung unterstützt also beispielsweise eine Geradeausfahrt, eine Schrägfahrt, eine Drehung im Stand und beliebige Kurvenfahrten. Sie ist damit zu unterscheiden von lediglich lenkbaren Antriebsmitteln, die nur zwei Freiheitsgrade (Vorwärtsfahrt, Drehung um Hochachse) umfassen. Lenkbare Antriebsmittel unterstützen also nur eine Geradeausfahrt und eine Kurvenfahrt, jedoch keine Seitwärtsfahrt und in der Regel auch keine Drehung im Stand.

Es ist weiterhin vorteilhaft, wenn die Antriebseinrichtung (12) des Transportroboters (1) dazu ausgebildet ist, als ein eigen-sicherer Antrieb zu wirken, der insbesondere eine passive Rücktreibbarkeits-Funktion und/oder eine gesteuerte Ausweichfähigkeits-Funktion umfasst.

Die Bewegungsräume der Bedienpersonen (50) mit den manuell geführten Hubwagen (100), einerseits, und der (Teil-)autonomen Förderfahrzeuge (101), andererseits, sind in der Regel durch eine Zonengrenze (ZG) getrennt. Es gibt also einerseits eine manuelle Zone (Z1) und andererseits eine autonome oder Teilautonome Fahrzone (Z3). Der Übergabebereich (105) kann Bestandteil beider Zonen (Z1 ,Z3) sein, oder eine separate Umlade-Zone (Z2) bilden.

Die omnidirektionale Beweglichkeit eines Transportroboters gewährt eine große Vereinfachung für die autonome Planung von Aktionsfolgen (AF), weil in der Regel keine Randbedingungen vorliegen, die die Planung eines Bewegungskurses (Kursvorgabe) einschränken oder ausschließen würden, durch den der Transportroboter (1) von dem Start-Ort in den Ziel-Ort zu überführen.

Durch die eigensichere Ausbildung der Antriebseinrichtung (12) wird erreicht, dass die Transportroboter (1) auch auf engem Raum zusammen mit einer oder mehreren Bedienpersonen (50) eingesetzt werden können, also insbesondere im Laderaum (103) eines Fernlogistik-Fahrzeugs (102).

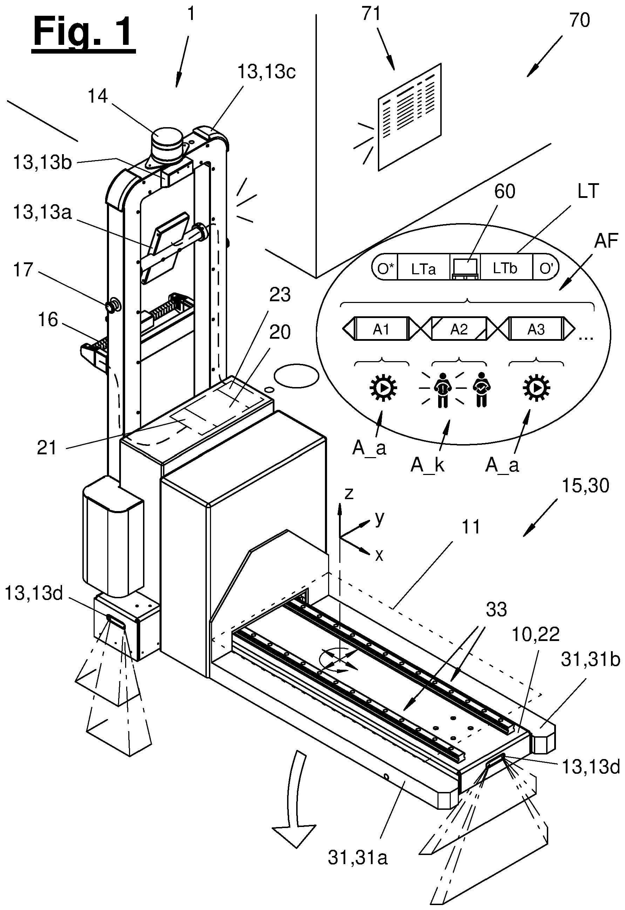

Die Anforderung einer Kollaboration (KA) für die Durchführung einer kollaborativen Interaktion (A_K) kann auf beliebige Weise erfolgen. Der Transportroboter (1) umfasst bevorzugt eine Ausgabe-Schnittstelle mit einer Verbindung (direkt oder indirekt) zu einer Anzeigeeinrichtung (13). Die Anzeigeeinrichtung (13) kann eine beliebige Ausbildung haben. Sie kann an dem Transportroboter (1) angeordnet sein und/oder eine entfernte Anzeigeeinrichtung sein. An dem Transportroboter (1) können ferner eine oder mehrere Anzeigeeinrichtungen (13) vorgesehen sein. In dem Beispiel von Figur 1 weist der Transportroboter (1) beispielsweise ein Display (13a), eine akustische Signaleinrichtung (13b), mehrere Lichtsignaleinrichtungen (13c) und/oder ein oder mehrere Projektoren (13d).

Das Display (13a) kann dazu ausgebildet sein, komplexe Informationen mit wechselnden graphischen oder textuellen Inhalten zu vermitteln. Beispielsweise kann eine Kollaborations-Anforderung (KA) durch eine Textmitteilung implementiert werden wie: "nächster Schritt: Vorpositionierung des Transportroboters (1) vor der Ladung mit Palettenkennung ABC123".

Eine entsprechende Mitteilung könnte alternativ oder zusätzlich über diese akustische Signaleinrichtung (13b) ausgegeben werden. Die Lichtsignaleinrichtungen (13c) können beispielsweise dafür eingesetzt werden, durch farbige Signalausstrahlung und/oder gepulste Signalausstrahlung anzuzeigen, dass sich der Transportroboter (1) in einem bestimmten Zustand befindet, beispielsweise "warte auf kollaborative Interaktion" oder "tätig im autonomen Eigen-Steuermodus" oder "Wartezustand ohne aktive Aktion", welche jeweils durch unterschiedliche Farben und/oder Impulskodierung kenntlich gemacht werden können.

Über die ein oder mehreren Projektoren (13d) kann ein Transportroboter (1) beispielsweise eine in der nächsten Zukunft zu erwartende Bewegung und/oder die Grenzen eines definierten Ziel-Orts anzeigen, indem beispielsweise Linien oder Symbole auf dem Boden projiziert werden.

Die vorgenannten Beispiele sind rein illustrativ und können in beliebiger Weise kombiniert oder vertauscht werden sowie durch andere Formen der Informationsvermittlung ergänzt oder ersetzt werden. Der Transportroboter gibt bevorzugt für die Ausführung einer kollaborativen Interaktion (A_K) über die Ausgabeschnittstelle (23) erläuternde Informationen über die kollaborative Interaktion (A_K) aus, insbesondere den definierten Ziel-Zustand (S1) und den definierten Anfangs-Zustand (S0).

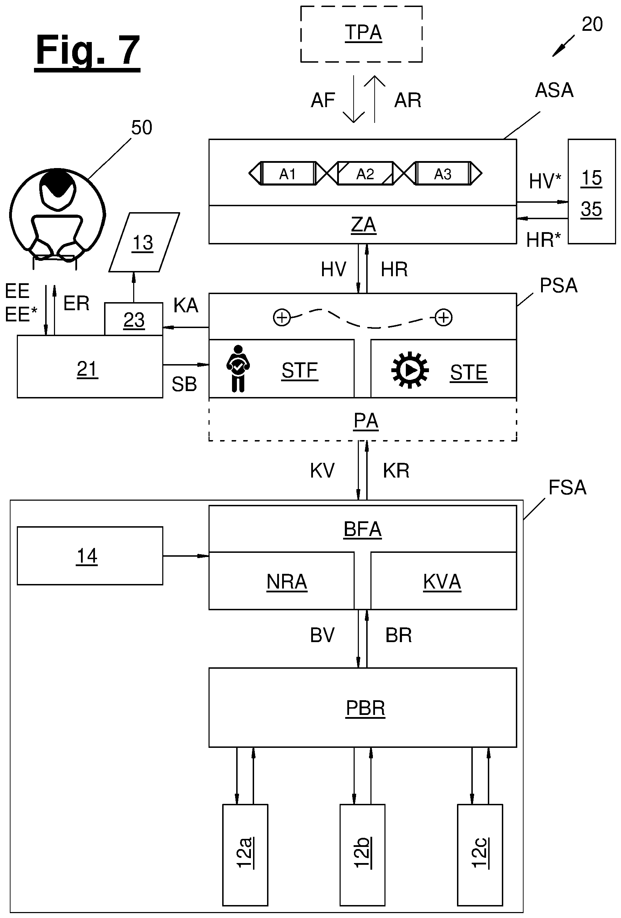

Die Steuerung (20) des Transportroboters (1) ist bevorzugt dazu ausgebildet, den Ist-Zustand des Transportroboters (1) zu überwachen, insbesondere die Ist-Position und den Ist-Beladungszustand des Transportroboters (1). Dementsprechend kann der Aktions-Steuerabschnitt (ASA) (vgl. Figur 7) bevorzugt eine Zustandsauswertung (ZA) umfassen, die insbesondere Abweichungen und Übereinstimmungen zwischen dem Ist-Zustand und den Soll-Zuständen erfasst. Der Aktions-Steuerabschnitt (ASA) kann auf eine beliebige Weise Informationen mit dem Plattform-Steuerabschnitt (PSA) austauschen. In dem Beispiel von Figur 7 werden durch den Aktionssteuerabschnitt (ASA) Handlungsvorgaben (HV) erzeugt, die Anweisungen für die Umsetzung einer autonomen Eigen-Aktion (A_e) oder einer kollaborativen Interaktion (A_k) definieren. Die Handlungsvorgaben (HV) können beispielsweise spezifizieren, ob der Fremd-Steuermodus (STF) oder der Eigen-Steuermodus (STE) durchzuführen ist und welcher Ziel-Ort für eine durchzuführende Aktion vorliegt. Eine Handlungs-Rückmeldung (HR) kann beispielsweise Informationen darüber umfassen, welche Ist-Position und/oder welchen Ist-Beladungszustand der Transportroboter (1) momentan hat und/oder ob im Plattformsteuerabschnitt (PSA) oder einer tieferliegenden Steuerebene, beispielsweise im Fahrantrieb-Steuerabschnitt (FSA) Abweichungen oder Ausnahmen auftreten, worauf weiter unten noch eingegangen wird.

Die Verarbeitung der Aktionsfolge (AF) kann auf beliebige Weise erfolgen. Bevorzugt ist die Steuerung (20) dazu ausgebildet, die Mehrzahl der Aktionen (Ai) in der Aktionsfolge (AF) gemäß der Reihenfolge auszuführen. Es kann insbesondere vorgesehen sein, dass die Ausführung einer als nächsten anstehenden Aktion (Ai) eingeleitet wird, wenn der momentane Ist-Zustand des Transportroboters (1) mit dem Start-Zustand (S0) gemäß dieser Aktion (Ai) übereinstimmt. Alternativ oder zusätzlich kann vorgesehen sein, dass der Abschluss einer momentan ausgeführten Aktion (Ai) erfragt wird, wenn der momentane Ist-Zustand des Transportroboters (1) mit dem Ziel-Zustand (S1) übereinstimmt.

Ein Soll-Zustand, insbesondere ein Anfangs-Zustand (S0) und ein Ziel-Zustand (S1), kann zumindest eine Soll-Position und/oder einen Soll-Beladungs-Zustand umfassen.

Wenn der Abschluss einer momentan ausgeführten Aktion (Ai) erfasst worden ist, kann die als nächstes anstehende Aktion (Ai) identifiziert werden und insbesondere bestimmt werden, ob der Ist-Zustand des Transportroboters (1) wiederum mit dem Anfangs-Zustand (S0) übereinstimmt.

Die Steuerung (20) kann bevorzugt dazu ausgebildet sein, selbsttätig neue Aktionen (Ai) zu planen oder eine neue oder geänderte Aktionsfolge (AF) von der Logistik-Steuerung (71) anzufordern. Eine solche Neuplanung oder Anforderung kann insbesondere erfolgen, wenn die Zustandsüberwachung (ZA) eine unzulässige, insbesondere eine den Toleranz-Rahmen überschreitende Abweichung zwischen dem Ist-Zustand des Transportroboters (1) und den aktuell relevanten Soll-Zuständen (S0,S1) erfasst.

Eine Umplanung kann beispielsweise vorsehen, dass eine ursprünglich als autonome Eigen-Aktion (A_e) geplante Aktivität ersetzt wird durch eine neu geplante kollaborative Interaktion (A_a). Eine solche Umplanung kann beispielsweise erfolgen, wenn die Geschwindigkeit der Ausführung in unzulässiger Weise die geplante Geschwindigkeit unterschreitet oder wenn Fehler oder Ausnahmezustände erfasst werden. Eine Neuplanung und Umplanung kann andererseits notwendig werden, wenn im Zuge der Ausführung einer autonomen Eigen-Aktion ein Hindernis im Fahrweg erkannt wird, das im Rahmen der momentan gültigen Handlungsvorgabe (HV) nicht eigenständig umfahren werden kann.

Besonders bevorzugt ist die Steuerung des Transportroboters (1) weiterhin dazu ausgebildet, während der Ausführung einer autonomen Eigen-Aktion (A_e) eine ungeplante externe Eingabe (EE*) über die Fremdsteuerschnittstelle (21) zu empfangen, und daraufhin die Ausführung der autonomen Eigen-Aktion (A_e) zu unterbrechen und im Fremd-Steuermodus (STF) gemäß der externen Eingabe (EE*) tätig zu werden.

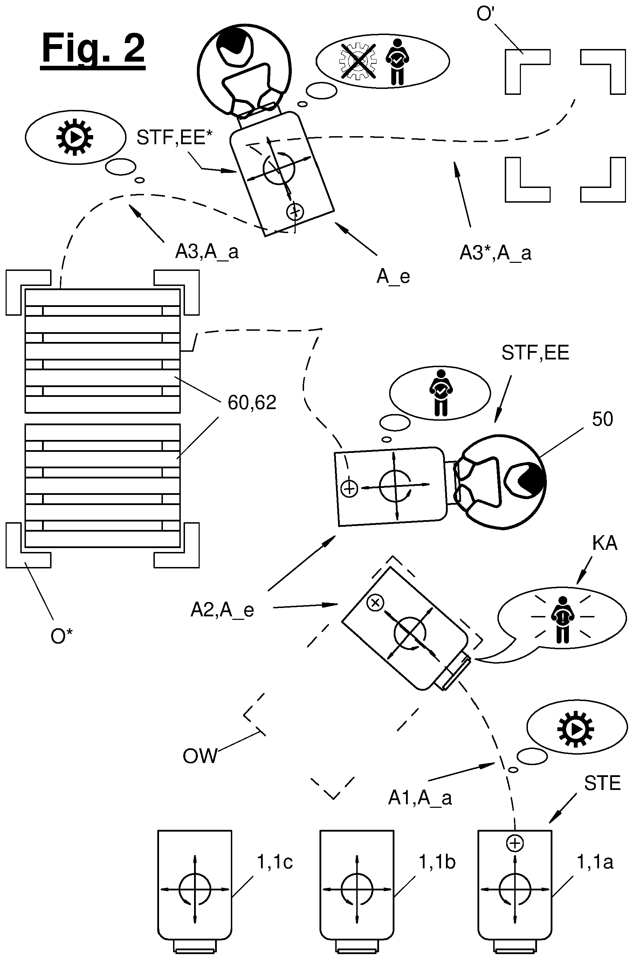

Figur 3 erläutert die möglichen Wechsel zwischen den Aktions-Arten autonome Eigen-Aktionen (Ae), geplante kollaborative Interaktionen (Ak) und (ungeplante) externe Interventionen (Ae). Die Aktionen nehmen dabei Bezug auf den in Figur 2 illustrierten Transportvorgang.

Eine erste Aktion (A1) ist als eine autonome Eigen-Aktion (Aa) in der Aktionsfolge (AF) geplant. Zu Beginn der Aktion wird festgestellt, dass sich der Transportroboter (1) an einer Ruhe-Position befindet und in einem unbeladenen Zustand ist, was mit dem Anfangs-Zustand (S0) übereinstimmt. Der Ziel-Zustand (S1) der Aktion (A1) sieht vor, dass die Soll-Position des Transportroboters (1) an einem vordefinierten Zwischenziel-Ort (OW) im Arbeitsbereich (72) und in der Nähe eines definierten Belade-Ortes (O*) liegen soll.

Anhand von Figur 7 wird beispielhaft die Umsetzung dieser Aktion erläutert.

Die Steuerung (20) des Transportroboters (1), insbesondere der Aktionssteuerabschnitt (ASA) stellt fest, dass die Ist-Position des Transportroboters (1) und/oder der Ist-Beladungszustand mit dem definierten Anfangs-Zustand (S0) übereinstimmt und beginnt mit der Durchführung der Aktion (A1). Die vorgenannte Feststellung kann insbesondere durch die Zustandsauswertung (ZA) der Steuerung (20) bzw. des Aktions-Steuerabschnitt (ASA) durchgeführt sein.

Wenn innerhalb einer Aktionsfolge (AF) eine erste Aktion (A1) als abgeschlossen erfasst wird und in der als nächstes anstehenden Aktion (A2) kein Anfangs-Zustand definiert ist, oder der Anfangs-Zustand mit dem Ziel-Zustand der vorhergehenden Aktion (A1) übereinstimmt, kann etwaig auf die Zustandsprüfung verzichtet werden.

Der Aktions-Steuerabschnitt (ASA) erzeugt eine Handlungsvorgabe (HV), welche Vorgaben für den Plattform-Steuerabschnitt (PSA) enthält, insbesondere die anzufahrende Soll-Position zum Ende der Aktion (A1) und die Vorgabe, dass die Aktion (A1) im Eigen-Steuermodus (STE) durchzuführen ist.

Der Plattform-Steuerabschnitt (PSA) erzeugt auf Basis der Handlungsvorgabe nun autonom eine Kursvorgabe für die Ansteuerung der Antriebseinheit, insbesondere zur Weitergabe an den Fahrantrieb-Steuerabschnitt (FSA). Die Kursvorgabe kann eine beliebige Zusammenstellung von Parametern sein, sie kann insbesondere Via-Punkte und ggf. Soll-Geschwindigkeiten für die Bewegung definieren. Die Kursvorgabe kann basierend auf einer Positionsauswertung (PA) und einer Kurs-Rückmeldung, die von dem Fahrantrieb-Steuerabschnitt empfangen wird, etwaig iterativ oder in einem geschlossenen Regelkreis aktualisiert werden.

Der Fahrantrieb-Steuerabschnitt (FSA) kann eine beliebige Ausbildung haben. Er umfasst bevorzugt einen Bewegungsführungsabschnitt (BFA) der eine oder mehrere Funktionen unterstützt. Zum einen kann ein Kollisionsvermeidungsabschnitt (KFA) vorgesehen sein, der dazu ausgebildet ist, die Kursvorgabe (KV) in eine ggf. adaptierte Bewegungs-Vorgabe (BV) umzurechnen, welche an eine Plattform-Bewegungsregelung (PBR) weitergegeben wird, die wiederum in steuernder oder regelnder Verbindung mit den Antriebseinheiten (12a, 12b, 12c) der bevorzugt omnidirektionalen Antriebseinrichtung (12) steht. Der KollisionsVermeidungsabschnitt bezieht bevorzugt Informationen über die Fahrumgebung. Diese Informationen können von einer beliebigen und ggf. mehreren Quellen bezogen werden. Bevorzugt ist zumindest eine Umfelderfassungseinrichtung (14) vorhanden, die weiterhin bevorzugt ein Bestandteil des Transportroboters (1) ist. Von der Umfelderfassungseinrichtung (14) können beispielsweise Abstände zu erkannten Hindernissen und/oder Lokalisierungs- und Identifizierungsdaten über stehende oder bewegliche Fremdobjekte in der Fahrumgebung bezogen werden. Beispielsweise kann der Kollisionsvermeidungsabschnitt einen Bewegungspfad planen, der einen bestimmten Mindestabstand zu Fremdobjekten einhält, um zu dem nächsten Via-Punkt oder der Position zu gelangen, die über den Ziel-Zustand (S1) definiert ist.

Die bezogenen Informationen über die Fahrumgebung können auch Daten über eine momentane und/oder eine geplante Bewegung eines oder mehrerer anderer Fahrzeuge, insbesondere eines oder mehrerer anderer Transportroboter (1) umfassen, die beispielsweise über eine Fahrzeug-zu-Fahrzeug-Kommunikation empfangen werden. Auf Basis solcher Daten können die Bewegungsvorgaben (BV) eines Transportroboters (1) mit der momentanen oder geplanten Bewegung eines Fremd-Fahrzeugs koordiniert werden. Die Koordination kann insbesondere vorsehen, dass eine Unterschreitung eines vorgesehenen Mindestabstands des Transportroboters (1) in einem definierbaren zukünftigen Zeitabschnitt gerechnet von der Momentan-Zeit vermieden wird.

Alternativ oder zusätzlich kann ein Stauvermeidungsabschnitt vorgesehen sein, der das Ein- und Ausfahren von Transportrobotern (1) an Abschnitten des Arbeitsbereichs (72) mit einer hohen Verkehrsdichte koordiniert, beispielsweise durch eine Abstimmung von mittleren Fahrgeschwindigkeiten und/oder einer Reihenbildung mit kollinearer Ausrichtung von Bewegungspfaden einer Gruppe von dicht beieinander agierenden Transportrobotern (1).

Der Bewegungsführungsabschnitt (BFA) kann Kursrückmeldungen (KR) an den Plattform-Steuerabschnitt (PSA) übermitteln, die beispielsweise eine momentane Geschwindigkeit, momentan aufgebrachte Eigenkräfte und/oder Eigenmomente sowie etwaig festgestellte auf den Transportroboter wirkende Fremdkräfte und Fremdmomente umfasst. So kann insbesondere die Plattformbewegungsregelung feststellen, dass eine externe rücktreibende Kraft auf den Transportroboter (1) einwirkt und selbsttätig dieser äußeren Kraft durch eine entsprechend geänderte Ansteuerung der Antriebseinheiten (12a,12b,12c) ausweichen. Mit anderen Worten umfasst die Plattformbewegungsregelung bevorzugt eine Nachgiebigkeitssteuerung. Bevorzugt können die ein oder mehreren externen Kräfte qualitativ und/oder quantitativ in Bezug auf mehrere Parameter bestimmt werden, beispielsweise hinsichtlich der Stärke, der Richtung und etwaig der Dauer und/oder Änderungsrate der externen Kraft.

Bei der externen Kraft, die im Rahmen der Nachgiebigkeitsregelung festgestellt wird, handelt es sich in der Regel nicht um Kräfte, die an einem haptischen Bediengerät (16) durch eine Bedienperson (50) aufgebracht werden, solche Kräfte werden in der Regel als externe Eingabe (EE, EE*) erfasst und durch die Fremdsteuer-Schnittstelle (21) empfangen. Vielmehr handelt es sich bei den externen Kräften um solche, die an einer beliebigen anderen Stelle des Transportroboters und/oder der Ladung aufgebracht werden, beispielsweise um eine Gefahrenzone zu räumen, eine Flucht zu ermöglichen oder schlicht, weil sich eine Person an einem Transportroboter (1) vorbeidrängen oder durch eine Gruppe von Transportrobotern (1) einen Weg bahnen möchte.

In dem Beispiel von Figur 2 erreicht der Transportroboter (1) zum Ende der Aktion (A1) den Zwischenziel-Ort (OW), d.h. die Ist-Position bzw. der Ist-Zustand des Transportroboters (1) stimmt mit dem definierten Ziel-Zustand (S1) überein. Es wird somit erfasst, dass die Aktion (A1) abgeschlossen ist und die Steuerung (20), insbesondere der Aktions-Steuerabschnitt (ASA) schreitet mit der Verarbeitung der nächsten Aktion (A2) fort. In dem gezeigten Beispiel ist diese nächste Aktion (A2) als kollaborative Interaktion (A_k) definiert. In dem gezeigten Beispiel ist der Anfangs-Zustand (S0) mit einer Soll-Position an dem Zwischenziel-Ort (OW) und gegebenenfalls mit dem Soll-Beladungszustand "unbeladen" definiert. Der Ziel-Zustand (S1) sieht eine Soll-Position am Belade-Ort (O*) vor und den Soll-Beladezustand "Ladung aufgenommen". Im vorliegenden Beispiel wurde aus Gründen der Vereinfachung die Vorpositionierung für das Beladen und die Durchführung eines Beladevorgangs in einer gemeinsamen Aktion zusammengefasst. Diese Aktivitäten können alternativ auch als getrennte Aktionen geplant sein.

Der Ist-Zustand des Transportroboters (1) stimmt erneut mit dem Anfangs-Zustand (S0) überein. Die Steuerung (20) beginnt die Ausführung der Aktion (A2). Da es sich um eine kollaborative Interaktion (A_k) handelt, fordert der Transportroboter (1) eine externe Eingabe (EE) von einer Bedienperson (50) an. Die Steuerung (20) schaltet weiterhin in den Fremd-Steuermodus (STF) um, damit der Transportroboter (1) und insbesondere die Bewegungsplattform (10) sowie etwaig der Lastaufnahmechanismus (30) gemäß der externen Eingabe (EE) tätig werden.

In der Darstellung von Figur 3 ist erläutert, dass bei einem Wechsel von einer autonomen Eigen-Aktion (A_a) zu einer geplanten kollaborativen Interaktion (A_k) in der Regel eine Kollaborations-Anforderung (KA) erzeugt wird und die weitere Bewegungsführung erst einsetzt, wenn eine externe Eingabe (EE) festgestellt wird.

In der Darstellung gemäß Figur 7 erzeugt der Aktions-Steuerabschnitt (ASA) also eine Handlungsvorgabe, die wiederum das tätig werden im Fremdsteuermodus (STF) definiert und zumindest den neuen Ziel-Zustand (S1) und insbesondere die Ziel-Position am Belade-Ort (O*) definiert. Im Fremd-Steuermodus (STF) empfängt der Plattform-Steuerabschnitt (PSA) ein oder mehrere Steuerbefehle (SB) von der Fremdsteuer-Schnittstelle (21), die wiederum eine externe Eingabe (EE) (direkt oder mittelbar) von einer Bedienperson (50) empfängt. In dem Beispiel von Figur 1 ist die Fremdsteuer-Schnittstelle (21) signaltechnisch mit einem haptischen Eingabegerät (16) verbunden, das im vorliegenden Beispiel an dem Transportroboter (1) angeordnet ist. Alternativ oder zusätzlich kann die Fremdsteuer-Schnittstelle (21) mit einem beliebigen anderen Eingabemittel, beispielsweise mit einer Fernsteuerung kommunikativ verbunden sein.

Die über die Fremdsteuer-Schnittstelle empfangene externe Eingabe (EE) definiert bevorzugt Steuervorgaben für die Ausführung einer omnidirektionalen Bewegung in der Ebene. Sie umfasst somit bevorzugt Signalanteile, die sich als Soll-Vorgaben für eine Bewegung mit einer ersten horizontalen Translation, einer davon unterschiedlichen zweiten horizontalen Translation und eine Rotation um die Hochachse beziehen.

Auch im Fremdsteuer-Modus (STF) erzeugt die Steuerung (20) und insbesondere bevorzugt der Plattform-Steuerabschnitt (PSA) eine Kursvorgabe (KV) für die Ansteuerung der Antriebseinrichtung (12). Die Kursvorgabe (KV) kann im Fremd-Steuermodus gegebenenfalls eine andere Definition haben als im Eigen-Steuermodus (STE). Sie kann beispielsweise eine Soll-Kraft, ein Soll-Moment, eine Soll-Geschwindigkeit in Translationsrichtung und/oder eine Soll-Winkelgeschwindigkeit umfassen. Die vorgenannten Soll-Parameter für Kraft, Moment und/oder Geschwindigkeit können in der genannten Form oder alternativ als Integralwert oder Differentialwert dazu vorliegen. Sie können weiterhin in einer beliebigen Unterkombination vorliegen und insbesondere in einem oder mehreren Vektoren zusammengefasst sein.

Der Fahrantrieb-Steuerabschnitt (FSA) empfängt bevorzugt die Kursvorgabe (KV) und berechnet daraus eine Bewegungsvorgabe (BV). Diese Berechnung kann auf beliebige Weise erfolgen. Bevorzugt umfasst der Fahrantrieb-Steuerabschnitt (FSA) einen Kollisionsvermeidungsabschnitt (KVA) der dazu ausgebildet ist, bei Vorliegen des Fremd-Steuermodus (STF) vorzugsweise eine Potentialfeldmethode zur Vermeidung von Kollisionen mit erkannten Hindernissen oder Fremdobjekten auszuführen. Die Potentialfeldmethode kann vorsehen, dass die Kursvorgabe mit einem oder mehreren Kraftvektoren überlagert wird, die eine virtuelle Abstoßungskraft repräsentieren, welche von einem erkannten Hindernis oder einem Fremdobjekt weg weist und in Abhängigkeit von dem Abstand des Transportroboters zu dem Hindernis oder Fremdobjekt im Betrag ansteigt.

Durch eine solche Potentialfeldmethode wird erreicht, dass für die Annäherung des Transportroboters ein Hindernis oder ein Fremdobjekt eine höhere Bedienkraft durch die Bedienperson (50) aufgebracht werden muss.

Mit anderen Worten erfolgt die Berechnung der Bewegungs-Vorgabe (BV) auf Basis einer empfangenen Kursvorgabe (KV) und auf Basis von Informationen über Hindernisse, Fremdobjekte und/oder Fremdfahrzeuge, um eine Kollisionsvermeidung zu erzielen.

In der Illustration von Figur 2 wird davon ausgegangen, dass die Bedienperson (50) mittels der externen Eingabe (EE) über das haptische Eingabegerät (16) den Transportroboter (1) derart steuert, dass er an eine Ladung (60) herangefahren wird und die Ladung aufnimmt. Zum Ende der Aktion (A2) ist die Ist-Position des Transportroboters (1) somit am Belade-Ort (O*) und der Ist-Beladungszustand ist "Ladung aufgenommen". Somit stellt die Steuerung (20) fest, dass die Aktion (A2) abgeschlossen ist und fährt mit der Verarbeitung der nächsten Aktion (A3) fort.

Gemäß der Darstellung in Figur 3 handelt es sich bei der Aktion (A3) um eine autonome Eigen-Aktion. Der Ist-Zustand des Roboters stimmt wieder mit dem definierten Anfangs-Zustand (S0) überein, d.h. Position = Belade-Ort (O*) und Beladungszustand ist "Ladung aufgenommen".

In einer bevorzugten Ausführung kann die Bedienperson (50) über ein technisches Eingabemittel erfassen, welche bestimmte Ladung (60) an dem Transportroboter (1) aufgenommen worden ist, beispielsweise durch Eingabe einer Sendungsnummer oder durch Scannen eines Ladungs-Identifikators. Sobald die aufgenommene Ladung identifiziert ist, kann die Steuerung (20) und insbesondere der Aktions-Steuerabschnitt (ASA) oder der Transport-Planungsabschnitt (TPA) feststellen, ob eine Änderung oder Konkretisierung des folgenden Lieferungs-Auftrags (LTb) und/oder der Soll-Zustände einer oder mehrere als nächstes zur Verarbeitung anstehender Aktionen (A3) erforderlich ist. Im vorliegenden Beispiel wird davon ausgegangen, dass die aufgenommene Ladung genau der zur Aufnahme geplanten Ladung entspricht. Somit ist keine Änderung notwendig und der Aktionssteuerabschnitt kann mit der Ausführung der als nächstes geplanten Aktion (A3) fortfahren, welche als Ziel-Zustand eine Position an einem Entlade-Ort (O') vorsieht. Auf die Definition des Soll-Beladezustands wird im vorliegenden Beispiel nicht mehr eingegangen, sie kann analog zu dem vorgenannten Beispiel vorliegen oder gemäß einem weiter unten beschriebenen Beispiel.

Gemäß der Illustration von Figur 2 und analog zu den obigen Erläuterungen zur Umsetzung einer autonomen Eigen-Aktion (A_a) beginnt der Transportroboter (1) eine Transportfahrt gemäß einer autonom erzeugten Kursvorgabe (KV). In dem Beispiel von Figur 2 tritt nun der Fall ein, dass eine Bedienperson (50) während der Ausführung der autonomen Eigen-Aktion (A_e) eine (ungeplante) externe Eingabe (EE*) vornimmt bzw. erzeugt, die über die Fremdsteuer-Schnittstelle (21) empfangen wird. Figur 3 illustriert die weitere Verarbeitung. Nun wird die Ausführung der autonomen Eigen-Aktion (A_e) unterbrochen und die Steuerung (20) schaltet dazu um, im Fremd-Steuermodus (STF) gemäß der externen Eingabe (EE*) tätig zu werden.

Die Erfassung der (ungeplanten) externen Eingabe (EE*) und die Durchführung der Aktionsunterbrechung können in der Steuerung (20) auf beliebige Weise umgesetzt sein.

In dem Beispiel von Figur 7 kann der Plattform-Steuerabschnitt (PSA) erfassen, dass während des Vorliegens eines Eigen-Steuermodus (STE) eine externe Eingabe (EE*) über die Fremdsteuer-Schnittstelle (21) erfasst wird. In einer bevorzugten Ausführung wird eine autonome Eigenaktion (A_e) sofort unterbrochen, wenn eine Bedienperson (50) das haptische Bediengerät (16) ergreift. Ferner schaltet die Steuerung (20) bevorzugt in den Fremd-Steuermodus (STF) um, wenn während der Ausführung einer autonomen Eigen-Aktion (A_e) über die Fremdsteuer-Schnittstelle (21) eine externe Eingabe (EE*) erfasst wird..

Die Bewegung des Transportroboters (1) wird nun analog zu den obigen Ausführungen im Fremd-Steuermodus (STF) ausgeführt. In der Illustration von Figur 2 ist angenommen, dass die Bedienperson (50) den Transportroboter (1) auf eine zur ursprünglichen Bewegungsbahn benachbarte Bewegungsbahn versetzt.

Die Steuerung (20) des Transportroboters (1) ist bevorzugt dazu ausgebildet, nach Abschluss der ungeplanten externen Eingabe (EE*) zu überprüfen, ob der dann vorliegende Ist-Zustand des Transportroboters (1) mit dem Ziel-Zustand (S1) gemäß der unterbrochenen autonomen Eigen-Aktion (A_e) übereinstimmt, und auf Basis dieser Überprüfung und im Hinblick auf die nachfolgenden Aktionen (Ai) in der Aktionsfolge (AF) oder im Hinblick auf die zugehörige Transport-Aufgabe (LT) selbsttätig zu entscheiden,
▪ ob die unterbrochene autonome Eigen-Aktion (A_e) fortgesetzt wird; oder
▪ ob eine neue autonome Eigen-Aktion (A_e) geplant und ausgeführt wird, welche die unterbrochene Aktion ersetzt; oder
▪ ob eine neue kollaborative Interaktion (A_k) geplant und ausgeführt wird.

Der Abschluss einer ungeplanten externen Eingabe (EE*) kann auf beliebige Weise festgestellt werden. Beispielsweise kann durch eine Bedienperson (50) gemäß der Darstellung in Figur 3 eine externe Abschlussbestätigung (EB) erteilt werden. Dies kann beispielsweise über eine hierfür vorgesehene Schaltfläche, einem Knopf oder ein beliebiges anderes geeignetes Bedienelement erfolgen. Alternativ oder zusätzlich kann der Abschluss einer ungeplanten externen Eingabe (EE*) erfasst werden, wenn für eine bestimmte Zeitdauer keine externe Eingabe (EE*) mehr an der Fremdsteuer-Schnittstelle (21) empfangen worden ist.

Die selbsttätige Entscheidung für das weitere Vorgehen kann auf beliebige Weise getroffen werden. Gemäß einer bevorzugten Ausführung kann ein Toleranzbereich definiert sein, bis zu dem eine Abweichung zwischen dem momentanen Ist-Zustand und einem Soll-Zustand des Transportroboters (1), insbesondere eine Abweichung zwischen dem Ist-Zustand und einem Anfangs-Zustand (S0) oder einem Ziel-Zustand (S1), noch als tolerierte Übereinstimmung aufgefasst wird. Wenn diese Toleranz überschritten ist, kann beispielsweise der Aktions-Steuerabschnitt (ASA) und insbesondere die Zustandsauswertung (ZA) feststellen, dass in der vorliegenden Aktionsfolge (AF) entweder eine bereits geplante zukünftige Aktion (Ai) vorliegt, die zu dem momentanen Ist-Zustand des Transportroboters (1) passt und mit der Verarbeitung dieser Aktion (A_e) fortfahren, oder, wenn keine passende Aktion (Ai) vorliegt, eine Aktions-Rückmeldung (AR) an den Transport-Planungsabschnitt (TPA) übermitteln. Die Aktions-Rückmeldung (AR) kann insbesondere Informationen über den momentanen Ist-Zustand des Transportroboters (1) und die etwaig aufgenommene Ladung (60) umfassen. Die Steuerung (20) und/oder die Logistik-Steuerung (71) kann nachfolgend eine oder mehrere neue Aktionen (Ai) erzeugen, welche die unterbrochene Aktion (A_e) und etwaig nachfolgende Aktionen (Ai) ersetzen. Diese können je nach Ist-Zustand des Transportroboters (1) erneut als geplante kollaborative Interaktion (A_k) oder als autonome Eigenaktion (A_e) gewählt sein.

Wie aus der Zusammenschau der Figuren 5 und 7 hervorgeht, kann ein Transport-Planungsabschnitt (TPA) sowie ein Aktions-Planungsabschnitt (APA) entweder Bestandteil einer Logistik-Steuerung (71) oder Bestandteil der Steuerung eines Transportroboters (1) sein. Es ist auch möglich, das ein Aktions-Planungsabschnitt (APA) mehrfach vorhanden ist, einerseits in der Logistik-Steuerung (71) und andererseits in der Steuerung (20) eines Transportroboters (1).

Das Logistiksystem (70) und insbesondere die Logistik-Steuerung (71) ist bevorzugt dazu ausgebildet, dass ein Belade-Ort (O*) und/oder ein Entlade-Ort (O') im Laderaum (103) eines Fernlogistik-Fahrzeugs (102) definierbar ist, insbesondere im Laderaum eines Lastkraftwagens, der zeitweise an einem Dock (104) im oder am Arbeitsbereich (72) abgestellt ist.

Alternativ oder zusätzlich kann ein Belade-Ort (O*) und/oder ein Entlade-Ort (O') im Übergabebereich einer Lager- oder Produktionseinrichtung definiert sein.

Das Logistik-System und insbesondere die Logistik-Steuerung (71) und/oder die Steuerung (20) des Transport-Roboters (1) kann somit dazu ausgebildet sein, dass ein Transport-Auftrag (LT) erzeugt wird, der vorsieht, dass eine Ladung (60) direkt zwischen einem Laderaum (103) eines ersten Fernlogistik-Fahrzeugs (102) und einem Laderaum eines weiteren Fernlogistik-Fahrzeugs oder einem Übergabebereich einer Lager- oder Produktionseinrichtung befördert wird.

Die Steuerung (20) des Transportroboters (1) und ebenso das Steuerverfahren können vorsehen, dass eine Kursvorgabe (KV) eine omnidirektionale Bewegung des Transportroboters (1) in der Ebene definiert. Ebenso kann eine Bewegungsvorgabe (BV) eine (kollisionsvermeidende) omnidirektionale Bewegung des Transportroboters (1) in der Ebene definieren. Alle oben genannten Verfahrensschritte, Abschnitte des Steuerungs-Verfahrens und die übermittelten maschinenlesbaren Datenobjekte und Signale können Bestandteil eines Computer-Programmprodukts sein. Das Computerprogrammprodukt ist bevorzugt auf einen Datenträger gespeichert oder über einen Datenschnittstelle empfangen. Es ist auf einer Datenverarbeitungseinrichtung, insbesondere der Steuerung (20) des Transportroboters (1) und/oder einer Logistik-Steuerung (71) ausführbar und erhält Anweisungen, die dazu geeignet sind bei der Ausführung eines oder mehrere der oben genannten Steuerverfahren durchzuführen.

Eine Datenverarbeitungseinrichtung für einen Transportroboter (1) und/oder ein Logistiksystem (20), insbesondere die Steuerung (20) und/oder die Logistik-Steuerung (71) ist entsprechend bevorzugt dazu ausgebildet, mindestens eines der oben beschriebenen Steuerverfahren auszuführen. Es kann hierzu mit dem Computerprogrammprodukt temporär oder dauerhaft ausgestattet sein.

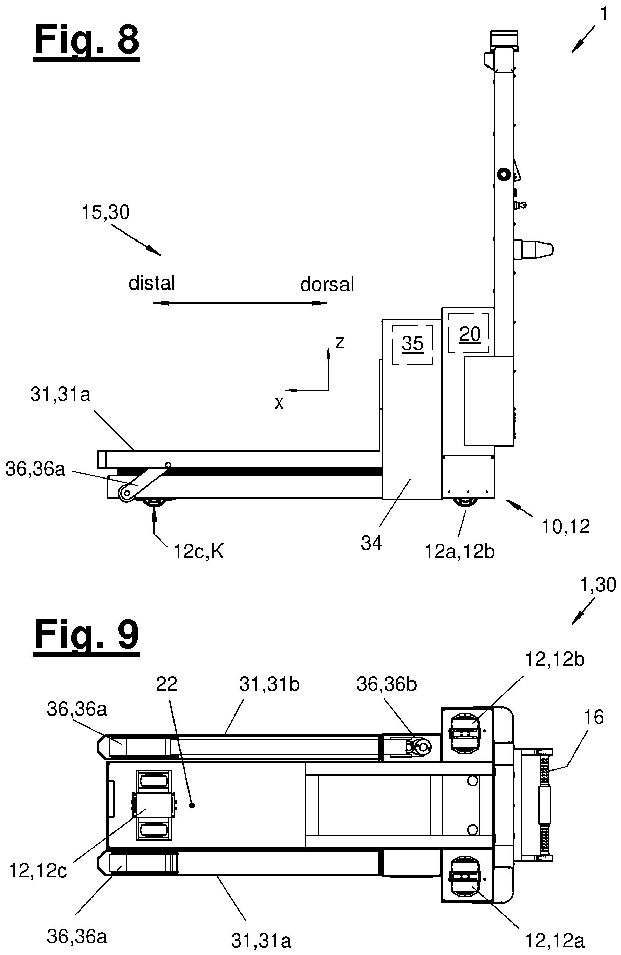

Figuren 1 und 8 bis 14 erläutern weitere bevorzugte Ausführungen eines Transportroboters (1), eines Last-Aufnahmemechanismus (30) und einer omnidirektionalen Antriebseinrichtung (12).

Der gezeigte Lastaufnahme-Mechanismus (39) ist bevorzugt an einem Transportroboter (1) ein oder mehrfach vorgesehen. Er umfasst einen Gabelträger (31) mit einer ersten Gabelzinke (31a) und einer zweiten Gabelzinke (31b) sowie eine Gabelträgerführung (33) und eine Gabelantriebsvorrichtung (34).

Die Gabelträgerführung (33) ermöglicht eine Bewegung des Gabelträgers (31) in einer ersten horizontalen Richtung (x), die im Wesentlichen parallel zu den Gabelzinken verläuft. Entlang dieser ersten Horizontalrichtung (x) ist eine nach außen, d.h. vom Körper des Transportroboters (1) weg weisende Orientierung als "distale" Richtung definiert, und eine dazu entgegengesetzte und zum Körper des Transportroboters (1) hin weisende Orientierung als eine "dorsale" Richtung.

Die Gabelträgerführung (33) ist bevorzugt zwischen oder neben den mindestens zwei Gabelzinken (31a,31b) angeordnet.

Bevorzugt ist der Gabelträger (31) und etwaig auch die Gabelantriebsvorrichtung (34) über die Gabelträgerführung (33) mit dem Transportroboter (1) und insbesondere der Bewegungsplattform (10) verbunden. Besonders bevorzugt weist der Transportroboter (1) und insbesondere die Bewegungsplattform (10) einen Auslegerabschnitt (22) auf, der sich im Wesentlichen in der ersten Horizontalrichtung (x) erstreckt und eine niedrige und lang gestreckte Bauform hat. Der Auslegerabschnitt (22) kann insbesondere einen Körperbereich des Transportroboters (1) bzw. der Bewegungsplattform (10) bilden, der im Wesentlichen unterhalb des Ladungsaufnahmebereichs (11) angeordnet ist, auf welchem für eine Transportfahrt die Ladung (60) aufzunehmen ist.

Der Gabelträger (33) kann direkt oder über die Gabelantriebsvorrichtung (34) mit der Gabelträgerführung (33) verbunden sein. In den gezeigten Beispielen ist der Gabelträger (33) in der Vertikalrichtung (z) steuerbar beweglich an der Gabelantriebsvorrichtung (34) gelagert und die Gabelantriebsvorrichtung (34) ist (in der ersten Horizontalrichtung x) steuerbar beweglich an der Gabelträgerführung (33) gelagert. Eine alternative Ausführungsform (nicht dargestellt) kann vorsehen, dass der Gabelträger (33) in der ersten Horizontalrichtung (x) steuerbar beweglich an der Gabelträgerführung (33) gelagert ist und die Gabelträgerführung (33) wiederum in der Vertikalrichtung (z) steuerbar beweglich an der Gabelantriebsvorrichtung (34) gelagert ist.

Der Lastaufnahme-Mechanismus (30) weist eine Hubeinrichtung (36) mit mindestens einem ein- und ausfahrbaren Stützmittel (36a) auf. Der Lastaufnahme-Mechanismus (30) und insbesondere das ausfahrbare Stützmittel (36a) ist dazu ausgebildet, im ausgefahrenen Zustand an einem distalen Abschnitt mindestens einer Gabelzinke (31a, 31b) eine Kraftabstützung gegenüber dem Untergrund herzustellen und im eingefahrenen Zustand vom Untergrund entfernt zu sein/werden.

Das Stützmittel (36a) kann eine beliebige körperliche Ausbildung haben. Bevorzugt sind mindestens zwei Stützmittel (36a) vorhanden, insbesondere je eines an der ersten Gabelzinke (31a) und der zweiten Gabelzinke (31b). In den Figuren ist das Stützmittel (36a) als ein schnwenkbarer Arm ausgebildet, an dessen Ende optional eine Rolle vorgesehen sein. Alternativ kann ein Teleskop-Arm oder ein Scheren-Gelenk vorgesehen sein.

Bevorzugt ist die Gabelantriebsvorrichtung (34) dazu ausgebildet, den Gabelträger (31) an einem dorsalen Abschnitt zu stützen und anzuheben.

Besonders bevorzugt ist der Lastaufnahme-Mechanismus (30) dazu ausgebildet, den Gabelträger (31) in einem ausgefahrenen Zustand, in dem der Gabelträger (31) entlang der ersten Horizontalrichtung (x) ausgefahren ist, durch eine kombinierte Betätigung der Hubeinrichtung (36) und der Gabelantriebsvorrichtung (34) anzuheben, sodass auf den Gabelträger (33) Hubkräfte sowohl am distalen Abschnitt als auch am dorsalen Abschnitt wirken. Hierdurch kann die Gewichtskraft der Ladung (60), die etwaig zeitweise auf den Gabelträger (31) wirkt, in der ersten Horizontalrichtung (x) vor und hinter dem Schwerpunkt (SP) der auskragenden Masse (von Gabelträger und Ladung) abgestützt werden.

Der Gabelträger (31) weist hinsichtlich seiner Beweglichkeit in der ersten horizontalen Richtung zwei unterscheidbare Zustände auf, einerseits einen eingefahrenen Zustand, in dem der Gabelträger (31) entlang der ersten horizontalen Richtung (x) eingefahren ist, und einen ausgefahrenen Zustand, in dem der Gabelträger entlang der ersten horizontalen Richtung (x) in distaler Richtung ausgefahren ist.

Der Lastaufnahme-Mechanismus (30) ist bevorzugt dazu ausgebildet, den Gabelträger (31) in dem eingefahrenen Zustand zusätzlich in einer vertikalen Richtung (z) ausschließlich durch die Gabelantriebsvorrichtung (34) und/oder die Gabelträgerführung (33) abzustützen.

In dem eingefahrenen Zustand ist somit keine zusätzliche Abstützung über die Hubeinrichtung (36) und insbesondere das mind. eine Stützmittel (36a) erforderlich.

Die vorliegende Offenbarung umfasst einen Transportroboter (nicht dargestellt), mit einer beliebigen körperlichen und/oder steuertechnischen Ausbildung, der mit mind. einem Lastaufnahme-Mechanismus (30) gemäß der vorliegenden Offenbarung ausgestattet ist bzw. diese umfasst.

Bevorzugt ist ein Transportroboter (1) vorgesehen, der eine Steuerung (20) mit einem Eigen-Steuermodus (STE) und einem Fremd-Steuermodus (STF) umfasst. Der Lastaufnahme-Mechanismus (30) ist weiterhin bevorzugt dazu ausgebildet, in einem Eigen-Steuermodus (STE) durch die Steuerung (20) des Transportroboters (1) und/oder durch eine separate Steuerung (35) des Lastaufnahme-Mechanismus (30) auf Basis einer autonomen Eigenaktion selbsttätig gesteuert zu werden und im Fremd-Steuermodus auf Basis einer externen Eingabe (EE,EE*) gesteuert zu werden, welche über eine Fremdsteuerungs-Schnittstelle (21) des Transportroboters (1) oder eine separate Fremdsteuerungs-Schnittstelle des Lastaufnahme-Mechanismus (30) empfangen wird.

Es kann bevorzugt weiterhin vorgesehen sein, dass eine autonome Eigen-Aktion (A_e) einen Soll-Zustand zum Ende der Aktion (Ai) als Ziel-Zustand (S1) vorsieht und optional weiterhin einen Soll-Zustand des Lastaufnahme-Mechanismus (30) zu Beginn der Aktion (Ai) als Anfangs-Zustand (S0). Der Soll-Zustand umfasst dabei bevorzugt zumindest einen Soll-Beladungs-Zustand.

Die Steuerung (20) des Transportroboters (1) und/oder eine separate Steuerung (35) des Lastaufnahme-Mechanismus (30) ist bevorzugt dazu ausgebildet, eine Aktionsfolge (AF) zu verarbeiten, die eine Mehrzahl von Aktionen (Ai) zur Erfüllung eines Transportauftrags (LT) in einer vorgesehenen Reihenfolge umfasst, und wobei die Aktionsfolge (AF) neben einer autonomen Eigen-Aktion (A_e) weiterhin eine kollaborative Interaktion (A_k) definieren kann. Bei der kollaborativen Interaktion (A_k) ist bevorzugt vorgesehen, dass der Transportroboter (1) und/oder der Lastaufnahme-Mechanismus (30) eine externe Eingabe (EE) von einer Bedienperson (50) anfordert (KA) und im Fremd-Steuermodus (STF) gemäß der externen Eingabe (EE) tätig wird.

Es kann weiterhin bevorzugt vorgesehen sein, dass die Steuerung (20) des Transportroboters (1) und/oder eine separate Steuerung (35) des Lastaufnahme-Mechanismus (30) dazu ausgebildet ist, während der Ausführung einer autonomen Eigen-Aktion (A_e) eine ungeplante externe Eingabe (EE*) über eine Fremdsteuer-Schnittstelle (21) der Steuerung (20) des Transportroboters (1) oder einer separaten Steuerung (35) des Lastaufnahme-Mechanismus (35) empfängt und daraufhin die Ausführung der autonomen Eigen-Aktion (A_e) unterbricht und im Fremd-Steuermodus (STF) gemäß der externen Eingabe (EE*) tätig wird.

Weiterhin ist bevorzugt die Steuerung (20) des Transportroboters (1) und/oder eine separate Steuerung (35) des Lastaufnahme-Mechanismus (30) dazu ausgebildet, nach Abschluss einer ungeplanten externen Eingabe (EE*) zu überprüfen, ob der dann vorliegende Ist-Zustand mit dem Ziel-Zustand (S1) gemäß der unterbrochenen autonomen Eigen-Aktion (A_e) übereinstimmt, und auf Basis dieser Überprüfung zu entscheiden,
▪ ob die unterbrochene autonome Eigen-Aktion (A_e) fortgesetzt werden kann;oder
▪ ob eine neue autonome Eigen-Aktion (A_e) geplant und ausgeführt werden kann, welche die unterbrochene Aktion ersetzt; oder
▪ ob eine neue kollaborative Interaktion (A_k) geplant und ausgeführt werden soll.

Im Übrigen kann der Transportroboter in allen Merkmalen dieselbe Ausbildung haben, die zu den vorgenannten Aspekten erläutert worden ist.

Bevorzugt kann der Transportroboter (1) und insbesondere die Bewegungsplattform (10) einen starren Auslegerabschnitt (22) umfassen, der sich in einem Bereich erstreckt, der in der zweiten Horizontalrichtung (y) zwischen zwei Gabelzinken (31a,31b) oder eben neben einer der Gabelzinken (31a,31b) verläuft. An einem distalen Ende des Auslegerabschnitts (22) ist bevorzugt mind. eine (omnidirektionale) Antriebseinheit (12c) angeordnet, die eine Abstützung gegenüber dem Untergrund bildet.

Der Auslegerabschnitt (22) ist bevorzugt als im Wesentlichen flacher Körper ausgebildet, der eine möglichst niedrige Höhe über dem Untergrund aufweist. Er kann insbesondere an einer Oberseite und/oder mind. einer in der zweiten Horizontalrichtung (y) liegenden Außenseite einen Aufnahmeabschnitt für die Gabelträgerführung (33) des Lastaufnahme-Mechanismus (30) aufweisen. Die Höhe des Auslegerabschnitts (22) kann bevorzugt weniger als 25cm, weiter bevorzugt weniger als 17cm betragen. Der Gabelträger (31) des Lastaufnahme-Mechanismus (30) ist bevorzugt in der Vertikalrichtung (Z) auf eine Höhe absenkbar, bei der die Oberseite mind. einer Gabelzinke (31a,31b) weiter bevorzugt mind. zweier Gabelzinken (31a,31b) unterhalb der Höhe des Auslegerabschnitts (22) ist, beispielsweise bei einer Höhenlage von weniger als 25cm, insbesondere weniger als 10cm über dem Untergrund.

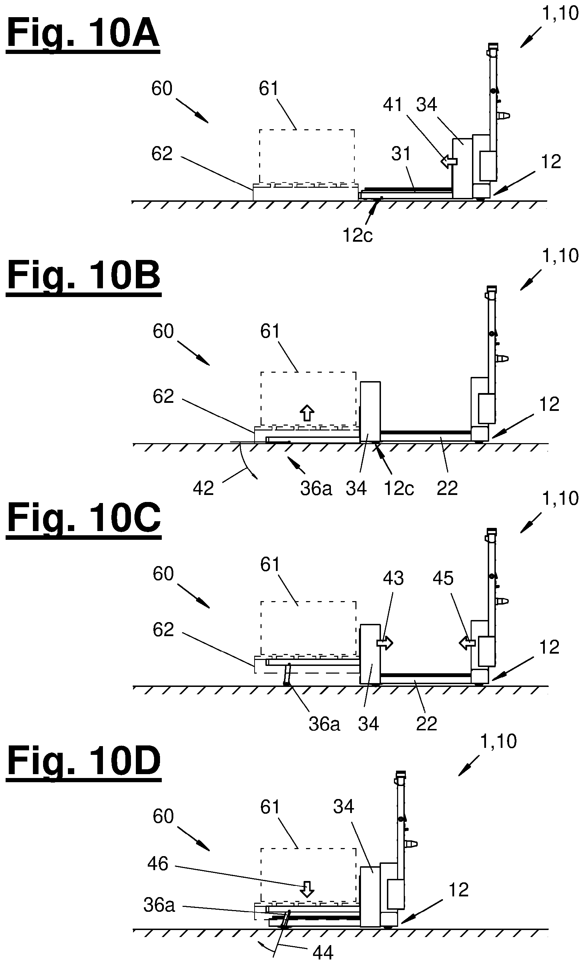

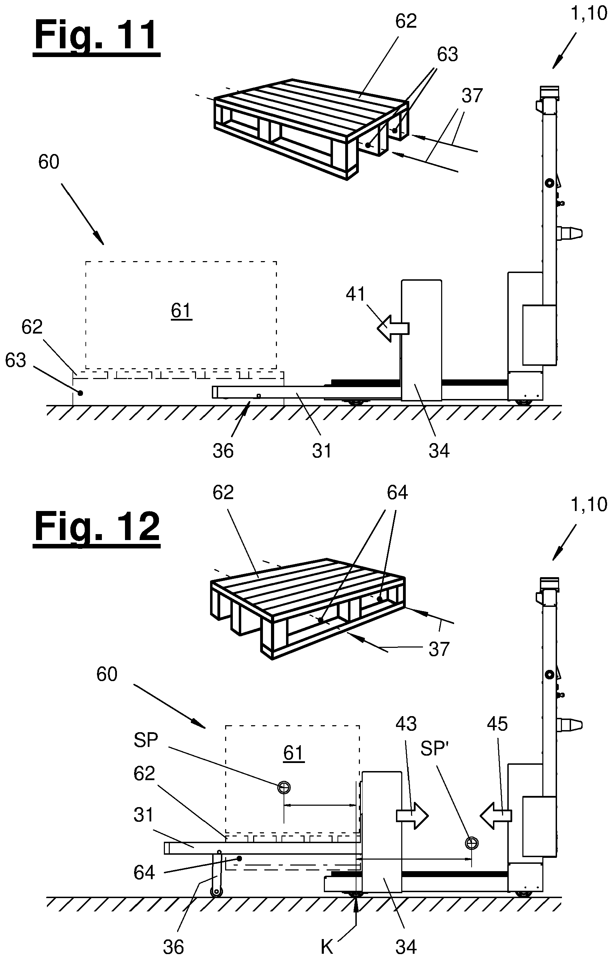

Figuren 10A bis 10D sowie 11 und 12 illustrieren den Lastaufnahme-Mechanismus (30) bzw. den Transportroboter (1) während der Durchführung eines Lastaufnahmeverfahrens. Figur 10A zeigt einen Zustand, in welchem der Gabelträger (31) - und damit bevorzugt auch der Transportroboter (1) - an einer aufzunehmenden Ladung (60) vorpositioniert ist. Die Vorpositionierung ist insbesondere derart, dass die distalen Enden der Gabelzinken (31a,31b) vor mind. einem Kanal (63,64) angeordnet sind, der oder die innerhalb oder unterhalb der aufzunehmenden Ladung (60) verlaufen. Ein solcher Kanal (63,64) kann beliebig ausgebildet sein. Gemäß der Darstellung in Figur 11 kann beispielsweise ein Kanal (63) vorliegen, der einen nach unten halb-offenen Querschnitt aufweist, wie dies beispielsweise bei den Längs-Kanälen von Euro-Paletten der Fall ist.

Alternativ kann ein Kanal (64) vorliegen, wie in Figur 12 dargestellt, der einen geschlossenen Querschnitt aufweist. Dies kann insbesondere ein bei Euro-Paletten üblicher Quer-Kanal sein.

Nach oder mit Erreichen des vorgenannten Zustands, bei dem der Gabelträger (31) - und damit bevorzugt auch der Transportroboter (1) - an einer aufzunehmenden Ladung (60) vorpositioniert ist wird bevorzugt der Schritt ausgeführt: Ausfahren (41) des Gabelträgers (31) entlang der ersten Horizontalrichtung (x), so dass die Gabelzinken (31a,31b) den mind. einen Kanal (63,64) durchgreifen.

Figur 10B zeigt einen Zustand zum Ende oder nach dem Ausfahren des Gabelträgers (31). Es folgt nun eine Expansions-Betätigung (42) der Hubeinrichtung (36), so dass das Stützmittel (36a) in einen ausgefahrenen Zustand übergeht, in welchen es auf dem Untergrund abgestützt ist, und Anheben des Gabelträgers (31) in einer vertikalen Richtung (Z), so dass die Ladung (60) auf dem Gabelträger (31) aufgenommen und vom Untergrund abgehoben wird.

Durch das expandierte Stützmittel (36a) wird sichergestellt, dass keine KippGefahr für den Transportroboter (1) und den Lastaufnahme-Mechanismus (30) in Folge der aufzunehmenden Last, d.h. der Ladung (60) besteht.

Figur 10c illustriert einen nachfolgenden Zustand. Es erfolgt der Schritt: Einfahren (42) des Gabelträgers (31) in der ersten Horizontalrichtung (x) unter Mitnahme der aufliegenden Ladung (60).

Gemäß einem optionalen Schritt kann die Bewegungsplattform (10) während der Einzugsbewegung des Gabelträgers (31) eine Gegenbewegung (45) in der Horizontalrichtung (x) ausführen, wobei die Bewegungsplattform (10) entgegengesetzt zur Einzugsbewegung des Gabelträgers (31) bewegt wird.

Die Gegenbewegung (45) kann insbesondere bei einem entgegengerichteten und im Betrag übereinstimmenden Geschwindigkeitsprofil zur Einzugsbewegung (43) des Gabelträgers (31) erfolgen. Wenn dies der Fall ist, verharrt der Gabelträger (31) und die mitgenommene Ladung (60) in absoluten Koordinaten an der Stelle, während sich der Transportroboter (1) bzw. die Bewegungsplattform (10) in absoluten Koordinaten distal in Richtung der Ladung (60) bzw. in der ersten Horizontalrichtung (x) bewegt. Mit anderen Worten schiebt sich die Bewegungsplattform (10) insbesondere mit dem Auslegerabschnitt (22) unter die angehobene Ladung (60) und/oder den angehobenen Gabelträger (31).

Figur 10d illustriert einen Zustand, zum Ende oder nach Abschluss der Einzugsbewegung (43).

Zu diesem Zeitpunkt oder bereits davor kann eine Kontraktions-Betätigung (44) der Hubeinrichtung (36) ausgeführt werden, sodass das Stützmittel (36b) in einen eingefahrenen Zustand übergeht, in welchem die Abstützung auf dem Untergrund aufgehoben ist.

Ein solches Einfahren des Stützmittels (36b) kann in jedem Fall erfolgen, wenn sich der Gesamtschwerpunkt des Transportroboters (1) mit der aufgenommenen Last in der ersten Horizontalrichtung (x) dorsal zu einem Aufstandspunkt der Antriebseinrichtung (12) auf dem Untergrund befindet, wobei dieser Aufstandspunkt (K) insbesondere durch den in der Horizontalrichtung (x) am weitesten distal gelegenen Teil der Antriebsvorrichtung (12) gebildet ist, insbesondere durch die dritte Antriebseinheit (12c).

Mit anderen Worten kann bevorzugt eine Kontraktions-Betätigung der Hubeinrichtung (36) während einer Einzugsbewegung (43) des Gabelträgers (31) entlang der erste Horizontalrichtung (x) in belasteten Zustand frühestens dann ausgelöst werden, wenn die Kippmomente über einem Aufstandspunkt (K) der Antriebseinrichtung (12) derart vorliegen, dass die Summe der Momente auf Massen, die über diesen Aufstandspunkt (K) distal auskragen, geringer sind als die Summe der Momente aus Massen, die dorsal zu dem Aufstandspunkt (K) gelegen sind.

Das Lastaufnahmeverfahren kann bevorzugt vorsehen, dass der Gabelträger (31) zum Ende oder nach Abschluss der Einzugsbewegung (43) in der Vertikalrichtung (z) abgesenkt wird, bis die Ladung (60) zumindest anteilig auf einem Ladungsaufnahmebereich (11) des Transportroboters (10), beispielsweise auf einer Oberfläche des Auslegerabschnitts (22) aufliegt. Das Absetzen der Last kann in umgekehrter Reihenfolge zu dem beschriebenen Lastaufnahmeverfahren erfolgen. Es kann insbesondere folgende Schritte umfassen, die in umgekehrter Reihenfolge zu den Zuständen der Figuren 10A bis 10D nachvollziehbar sind:
▪ Optionaler Schritt in einem Zustand, in welchem die aufgenommene Ladung zumindest anteilig auf einem Ladeaufnahmebereich des Transportroboters abgestützt ist: Anheben des Gabelträgers bis die Ladung ausschließlich durch den Gabelträger (31) gestützt ist;
▪ Expansions-Betätigung der Hubeinrichtung, sodass das Stützmittel (36a) in einen ausgefahrenen Zustand übergeht, in welchem es auf dem Untergrund abgestützt ist;
▪ Ausfahren des Gabelträgers (31) in distaler Orientierung entlang der ersten Horizontalrichtung (x), sodass die Gabelzinken (31a, 31b);
▪ Absenken des Gabelträgers (31) in einer vertikalen Richtung (y), sodass die Ladung (60) auf dem Untergrund abgesetzt wird und der Gabelträger (31) von der Ladung (60) entlastet wird;
▪ Kontraktions-Betätigung der Hubeinrichtung (36), sodass das Stützmittel (36b) in einen eingefahrenen Zustand übergeht, in welchem die Abstützung auf dem Untergrund aufgehoben ist;
▪ Einfahren des Gabelträgers (31) in der ersten Horizontalrichtung (x) in dorsaler Orientierung.

Während des Ausfahrens des Gabelträgers kann wiederum die Bewegungsplattform (10) eine Gegenbewegung ausführen, bei der die Bewegungsplattform (10) in der Horizontalrichtung (x) entgegengesetzt zur Einzugsbewegung des Gabelträgers (31) bewegt wird, insbesondere mit einem entgegengerichteten und im Betrag übereinstimmenden Geschwindigkeitsprofil zur Einzugsbewegung des Gabelträgers.

Der Transportroboter (1) gemäß der vorliegenden Offenbarung umfasst bevorzugt eine omnidirektionale Antriebseinrichtung (12).

Diese Antriebseinrichtung (12) kann wiederum bevorzugt mehrere Antriebseinheiten (12a,12b,12c) umfassen, die ebenfalls bevorzugt als jeweils für sich omnidirektionale Antriebseinheiten ausgebildet sind.

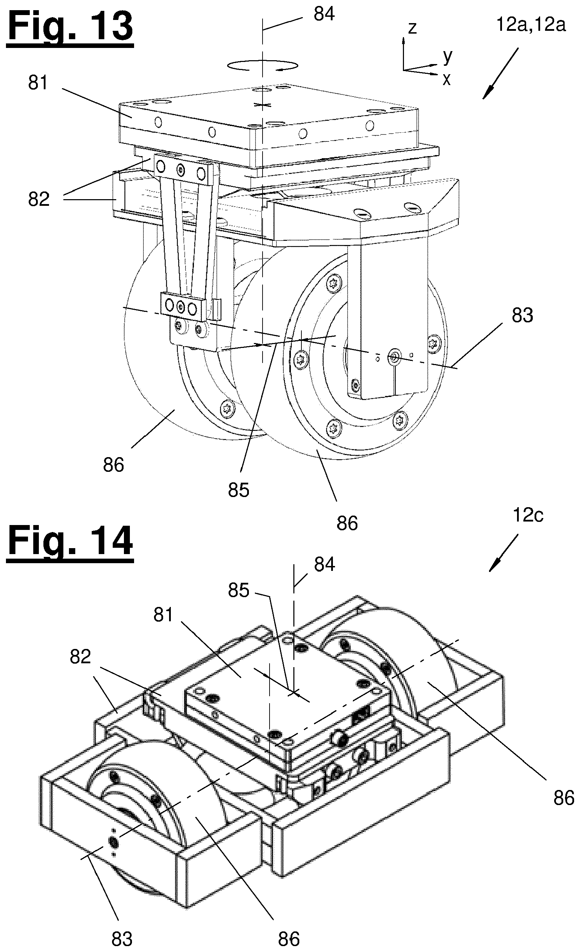

Figuren 13 und 14 zeigen zwei bevorzugte Ausbildungen einer solchen omnidirektionalen Antriebseinheit (80).

Diese umfasst jeweils einen Flanschbereich (81), über welchen die Antriebseinheit (80) an der Bewegungsplattform (10) befestigbar ist. Sie umfasst weiter einen Schwenkradträger (82), der gegenüber dem Flanschbereich (81) um eine im Wesentlichen vertikal ausgerichtete Schwenkachse (84) drehbar und insbesondere frei drehbar ist.

An dem Schwenkradträger sind mindestens zwei separat gesteuert antreibbare Antriebsräder (86) vorgesehen, die eine gemeinsame Radachse (83) aufweisen. Die Radachse (83) ist in einer Horizontalrichtung (x,y) um einen Nachlaufversatz (85) windschief zu der Schwenkachse (84) angeordnet. Auf diese Weise wird erreicht, dass im stromlosen Zustand sich der Schwenkradträger (82) infolge einer von außen auf den Transportroboter (1) bzw. die Bewegungsplattform (10), weiter insbesondere den Flanschbereich (81), aufgebrachte Kraft selbsttätig ausrichtet. Die Antriebsräder (86) sind besonders bevorzugt selbsthemmungsfrei ausgebildet und ggf. elektronisch bremsbar oder bei einer beliebigen Geschwindigkeit separat antreibbar.

Die vorliegende Offenbarung umfasst auch ein Computerprogrammprodukt, dass auf einem Datenträger gespeichert oder über eine Datenschnittstelle empfangen sein kann, wobei das Computerprogrammprodukt auf einer Datenverarbeitungseinrichtung ausführbar ist, insbesondere auf einer Steuerung (20) der Transporteinrichtung (1) und/oder einer separaten Steuerung (35) des Lastaufnahme-Mechanismus (30), und wobei das Computerprogrammprodukt Anweisungen enthält, die dazu geeignet sind, bei der Ausführung ein Lastaufnahmeverfahren gemäß den obigen Erläuterungen durchzuführen.

Weiterhin ist eine Datenverarbeitungseinrichtung, insbesondere eine Steuerung (20) für einen Transportroboter und/oder eine separate Steuerung (35) für einen Lastaufnahme-Mechanismus (30) ein Bestandteil der vorliegenden Offenbarung, wobei die Datenverarbeitungseinrichtung dazu ausgebildet ist, ein Lastaufnahmeverfahren gemäß den obigen Erläuterungen auszuführen.

In Figur 7 ist im oberen Abschnitt ein mögliches Zusammenwirken eines Steuerverfahrens für den offenbarten Transportroboter (1) und eines Lastaufnahmeverfahrens gemäß der vorliegenden Offenbarung illustriert.

Es kann beispielsweise ein Aktions-Steuerabschnitt (ASA) vorliegen, der im Rahmen einer Zustandsauswertung (ZA) sowohl Ist- und Sollzustände im Hinblick auf die Position des Transportroboters (1) als auch im Hinblick auf den Beladungszustand des Transportroboters (1) verwaltet, welcher von dem Zustand des Lastaufnahme-Mechanismus (30) abhängen kann. Der Aktions-Steuerabschnitt (20) kann insbesondere Handlungsvorgaben (HV) einerseits an den Plattformsteuerabschnitt und andererseits Handlungsvorgaben (HV*) a eine Steuerung des Lastaufnahme-Mechanismus (30) übermitteln. Die Steuerung des Lastaufnahme-Mechanismus (30) kann dabei einen Bestandteil der Steuerung (20) des Transportroboters (1) oder eine separate Steuerung sein.

Andererseits kann der Aktions-Steuerabschnitt (ASA) HandlungsRückmeldungen (HR) von dem Plattform-Steuerabschnitt und Handlungsrückmeldungen (HR*) von der Steuerung des Lastaufnahme-Mechanismus (30) empfangen und somit die Tätigkeiten des Plattformsteuerabschnitts sowie der nachgeordneten Steuerebenen und die Tätigkeiten zur Steuerung des Lastaufnahme-Mechanismus (30) miteinander koordinieren.

Die in der vorliegenden Offenbarung erwähnte Bewegungsplattform sowie die omnidirektionale Antriebsvorrichtung und die Antriebseinheiten können bevorzugt gemäß der Offenbarung in DE 20 2020 101 616 ausgebildet sein. Das haptische Bediengerät (16) kann bevorzugt gemäß der Offenbarung in DE 20 2020 104 319.6 ausgebildet sein.

Abwandlungen der Erfindung sind in verschiedener Weise möglich. Insbesondere können alle zu den Verfahren offenbarten Merkmale entsprechend Ausbildungsmerkmale der benannten Vorrichtungen und insbesondere der Steuerungen sein, und umgekehrt. Die zu den einzelnen Aspekten und Ausführungsbeispielen offenbarten oder beanspruchten Merkmale können in beliebiger Weise kombiniert oder gegeneinander ersetzt werden.

Ein separater Aspekt der vorliegenden Offenbarung, der eigenständig nutzbar und beliebigen Transportvorrichtungen kombinierbar ist, betrifft einen Lastaufnahme-Mechanismus (30) umfassend einen Gabelträger (31) mit einer ersten Gabelzinke (31a) und einer zweiten Gabelzinke (31b), eine Gabelträgerführung (33) und eine Gabelantriebsvorrichtung (34). Die Gabelträgerführung (33) ermöglicht eine Bewegung des Gabelträgers (31) in einer ersten Horizontalrichtung (x), die parallel zu den Gabelzinken verläuft. Der Lastaufnahme-Mechanismus (30) weist eine Hubeinrichtung (36) mit mindestens einem ein- und ausfahrbaren Stützmittel (36a) auf und ist dazu ausgebildet, im ausgefahrenen Zustand an einem distalen Abschnitt mindestens einer Gabelzinke (31a, 31b) eine Kraftabstützung gegenüber dem Untergrund herzustellen und im eingefahrenen Zustand vom Untergrund entfernt zu werden.

Die Gabelantriebsvorrichtung (34) kann dazu ausgebildet sein, den Gabelträger (31) an einem dorsalen Abschnitt anzuheben.

Die Gabelträgerführung (33) kann in einer zweiten Horizontalrichtung (y), die quer zu den Gabelzinken verläuft, neben oder zwischen den mindestens zwei Gabelzinken (31a, 31b) angeordnet sein.

Der Gabelträger (33) kann direkt oder über die Gabelantriebsvorrichtung (34) mit der Gabelträgerführung (33) verbunden sein.

Der Lastaufnahme-Mechanismus (30) kann dazu ausgebildet sein, den Gabelträger (31) in einem ausgefahrenen Zustand, in dem der Gabelträger (31) entlang der ersten horizontalen Richtung ausgefahren ist, durch eine kombinierte Betätigung der Hubeinrichtung (36) und der Gabelantriebsvorrichtung (34) anzuheben, sodass auf den Gabelträger (33) Hubkräfte am distalen Abschnitt und am dorsalen Abschnitt wirken.

Der Lastaufnahme-Mechanismus kann dazu ausgebildet sein, den Gabelträger (31) in einem eingefahrenen Zustand, in dem der Gabelträger (31) entlang der ersten horizontalen Richtung eingefahren ist, in einer vertikalen Richtung (z) ausschließlich durch die Gabelantriebsvorrichtung (34) und/oder die Gabelträgerführung (33) abzustützen.

Ein weiterer separater Aspekt der vorliegenden Offenbarung, der eigenständig nutzbar ist, betrifft einen Transportroboter (1) umfassend eine Bewegungsplattform (10) und einen Lastaufnahme-Mechanismus (30) gemäß dem vorgenannten Aspekt.

Der Transportroboter kann eine Steuerung (20) mit einem Eigen-Steuermodus (STE) und einem Fremd-Steuermodus (STF) umfassen. Die Steuerung ist dazu ausgebildet, den Lastaufnahme-Mechanismus (30) im Eigen-Steuermodus (STE) auf Basis einer autonomen Eigen-Aktion (Ai, A_e) selbsttätig zu steuern und im Fremd-Steuermodus (STF) auf Basis einer externen Eingabe (EE, EE*) zu steuern, die über eine Fremdsteuerungs-Schnittstelle (21) empfangen wird.

Die autonome Eigen-Aktion (Ai, A_e) kann einen Soll-Zustand zum Ende der Aktion (Ai) als Ziel-Zustand (S1) vorsehen.

Die Steuerung (20) kann dazu ausgebildet sein, eine Aktionsfolge (AF) zu verarbeiten, die eine Mehrzahl von Aktionen (Ai) zur Erfüllung eines Transportauftrags (LT) in einer vorgesehenen Reihenfolge umfasst. Die Aktionsfolge (AF) kann neben einer autonomen Eigen-Aktion (A_e) weiterhin eine kollaborative Interaktion (A_k) definieren, bei der der Transportroboter (1) eine externe Eingabe (EE) von einer Bedienperson anfordert (KA) und im Fremd-Steuermodus (STF) gemäß der externen Eingabe (EE) tätig wird.

Die Steuerung (20) kann dazu ausgebildet sein, während der Ausführung einer autonomen Eigen-Aktion (A_e) eine ungeplante externe Eingabe (EE*) über die Fremdsteuerschnittstelle (21) zu empfangen, und daraufhin die Ausführung der autonomen Eigen-Aktion (A_e) zu unterbrechen und im Fremd-Steuermodus (STF) gemäß der externen Eingabe (EE*) tätig zu werden.

Die Steuerung (20) kann dazu ausgebildet sein, nach Abschluss der ungeplanten externen Eingabe (EE*) zu überprüfen, ob der dann vorliegende Ist-Zustand mit dem Ziel-Zustand (S1) gemäß der unterbrochenen autonomen Eigen-Aktion (A_e) übereinstimmt, und auf Basis dieser Überprüfung zu entscheiden,
- ob die unterbrochene autonome Eigen-Aktion (A_e) fortgesetzt werden kann oder
- ob eine neue autonome Eigen-Aktion (A_e) geplant und ausgeführt werden kann, welche die unterbrochene Aktion ersetzt, oder
- ob eine neue kollaborative Interaktion (A_k) geplant und ausgeführt werden soll.

Der Transportroboter kann eine omnidirektionale Antriebseinrichtung (12) aufweisen.

Die Bewegungsplattform kann einen starren Auslegerabschnitt (22) umfassen, der sich in einem Bereich erstreckt, der in der zweiten horizontalen Richtung (y) zwischen zwei Gabelzinken (31a, 31b) oder neben einer der Gabelzinken (31a, 31b) verläuft. An einem distalen Ende des Auslegerabschnitts (22) kann eine Antriebseinheit (12c) angeordnet sein, die eine Abstützung gegenüber dem Untergrund bildet.

Die Gabelführung (33) kann an dem Auslegerabschnitt (22) angeordnet sein und/oder sich entlang dem Auslegerabschnitt (22) erstrecken.

Der Transportroboter (1) oder der Lastaufnahme-Mechanismus (30) kann eine Steuerung (20,35) aufweisen, die dazu ausgebildet ist, ein Lastaufnahmeverfahren mit den folgenden Schritten auszuführen:
- In einem Zustand, in welchem der Gabelträger (31) an einer aufzunehmenden Ladung (60) vorpositioniert ist, sodass die dorsalen Enden der Gabelzinken (31a, 31b) vor mindestens einem Kanal (63, 64) angeordnet sind, der innerhalb oder unterhalb der aufzunehmenden Ladung (60) verläuft: Ausfahren (41) des Gabelträgers (31) entlang der ersten Horizontalrichtung (x), sodass die Gabelzinken (31a, 31b) den mindestens einen Kanal (63, 64) durchgreifen;
- Expansions-Betätigung (42) der Hubeinrichtung (36), sodass das Stützmittel (36a) in einen ausgefahrenen Zustand übergeht, in welchem es auf dem Untergrund abgestützt ist, und Anheben des Gabelträgers (31) in einer vertikalen Richtung (y), sodass die Ladung (60) auf dem Gabelträger (31) aufgenommen und vom Untergrund abgehoben wird;
- Einfahren (42) des Gabelträgers (31) in der ersten Horizontalrichtung (x) unter Mitnahme der aufliegenden Ladung (60);
- Kontraktions-Betätigung (44) der Hubeinrichtung (36), sodass das Stützmittel (36b) in einen eingefahrenen Zustand übergeht, in
- welchem die Abstützung auf dem Untergrund aufgehoben ist.

Das vorgenannten Lastaufnahmeverfahren stellt einen eigenständigen Aspekt der vorliegenden Offenbarung dar, der unabhängig von der Art der Steuertechnik ist. Es ist durch eine beliebige Datenverarbeitungseinrichtung und/oder unter Nutzung beliebiger Steuermittel ausführbar.

Das Lastaufnahmeverfahren kann vorsehen, dass eine Kontraktions-Betätigung der Hubeinrichtung (36) während einer Einzugsbewegung des Gabelträgers (31) entlang der ersten horizontalen Richtung (x) im belasteten Zustand frühestens dann ausgelöst wird, wenn die Kippmomente über einem Aufstandspunkt der Antriebseinrichtung (12), der in der ersten Horizontalrichtung (x) am weitesten distal gelegen ist, derart vorliegen, dass die Summe der Momente aus Massen, die über diesen Aufstandspunkt auskragen, geringer ist als die Summe der Momente aus Massen, die dorsal zu dem Aufstandspunkt gelegen sind.

Das Lastaufnahmeverfahren kann vorsehen, dass die Bewegungsplattform (10) während einer Einzugsbewegung des Gabelträgers (31) eine Gegenbewegung ausführt, bei der die Bewegungsplattform (10) in der Horizontalrichtung (x) entgegengesetzt zur Einzugsbewegung des Gabelträgers (31) bewegt wird, insbesondere mit einem entgegengerichteten und im Betrag übereinstimmenden Geschwindigkeitsprofil zur Einzugsbewegung des Gabelträgers.

Das Lastaufnahmeverfahren kann vorsehen, dass der Gabelträger (31) zum Ende oder nach Abschluss der Einzugsbewegung (43) in der Vertikalrichtung (z) abgesenkt wird, bis die Ladung (60) zumindest anteilig auf einem Ladungsaufnahmebereich (11) der Bewegungsplattform (10) aufliegt, insbesondere auf dem mindestens einen Auslegerabschnitt (22).

Ein separater Aspekt der vorliegenden Offenbarung betrifft ein Computerprogrammprodukt, gespeichert auf einem Datenträger oder empfangen über eine Datenschnittstelle, wobei das Computerprogrammprodukt auf einer Datenverarbeitungseinrichtung ausführbar ist und Anweisungen enthält, die dazu geeignet sind, bei der Ausführung ein Lastaufnahmeverfahren nach dem vorstehenden Aspekt durchzuführen.

Ein separater Aspekt der vorliegenden Offenbarung betrifft Datenverarbeitungseinrichtung für einen Transportroboter (1) und/oder einen Last-Aufnahmemechanismus (30), wobei die Datenverarbeitungseinrichtung dazu ausgebildet ist, ein Lastaufnahmeverfahren nach dem vorstehenden Aspekt auszuführen

### Bezugszeichen

- 1: Transportroboter
- 1a: Erster Transportroboter
- 1b: Zweiter Transportroboter
- 1c: Dritter Transportroboter
- 10: Bewegungsplattform
- 11: Ladungsaufnahmebereich
- 12: Omnidirektionale Antriebseinrichtung
- 12a: Erste Antriebseinheit
- 12b: Zweite Antriebseinheit
- 12c: Dritte Antriebseinheit
- 13: Anzeigeeinrichtung
- 13a: Display
- 13b: Akustische Signaleinrichtung
- 13c: Lichtsignaleinrichtung
- 13d: Projektor
- 14: Umfelderfassungseinrichtung
- 15: Manipulator
- 16: Haptisches Eingabegerät
- 17: Sicherheits-Schalter / Not-Aus
- 20: Steuerung / Steuergerät / Datenverarbeitungseinrichtung
- 21: Fremdsteuer-Schnittstelle
- 22: Auslegerabschnitt
- 23: Ausgabe-Schnittstelle
- 30: Paletten-Manipulator
- 31: Gabelträger
- 31a: Erste Gabelzinke
- 31b: Zweite Gabelzinke
- 32: Hubeinrichtung (an Gabelzinke)
- 33: Gabelträgerführung
- 34: Gabelantriebsvorrichtung
- 35: Lastaufnahme-Mechanismus
- 36: Hubeinrichtung
- 36a: Stützmittel
- 36b: Stützmittel-Aktor
- 37: Einführrichtung
- 41: Ausfahrbewegung Gabelträger (horizontal)
- 42: Expansions-Betätigung Hubeinrichtung (vertikal)
- 43: Einzugsbewegung Gabelträger(horizontal)
- 44: Kontraktions-Betätigung Hubeinrichtung (vertikale)
- 45: Gegenbewegung der Bewegungsplattform (horizontal)
- 46: Absenkbewegung Gabelträger (vertikal)
- 50: Bedienperson
- 60: Ladung
- 60a: Erstes Ladungsgut
- 60b: Zweites Ladungsgut
- 61: Kiste / Karton
- 62: Ladungsträger (Euro-Palette)
- 63: Kanal, nach unten halboffener Querschnitt
- 64: Kanal, geschlossener Querschnitt
- 70: Logistik-System
- 71: Logistik-Steuerung
- 72: Arbeitsbereich
- 80: Omnidirektionale Antriebseinheit
- 81: Flanschbereich
- 82: Schwenkradträger
- 83: Radachse
- 84: Schwenkachse
- 85: Nachlaufversatz
- 86: Antriebsrad (separat gesteuert antreibbar)
- 100: Manuell geführter Hubwagen
- 101: (Teil-)autonomes Förderfahrzeug
- 102: Fernlogistik-Fahrzeug / Lastkraftwagen
- 103: Laderaum
- 104: Dock / Warenannahmezone
- 105: Übergabebereich
- A_a: Geplante Autonome Eigen-Aktion
- A_k: Kollaborative Interaktion
- A_e: Externe Intervention
- AF: Aktionsfolge
- APA: Aktions-Planungsabschnitt
- AR: Aktions-Rückmeldung
- ASA: Aktions-Steuerabschnitt
- BFA: Bewegungsführungsabschnitt
- BV: Bewegungs-Vorgabe
- BR: Bewegungs-Rückmeldung
- EB: Externe Abschlussbestätigung
- EE: Externe Eingabe (geplant / angeforderte Interaktion)
- EE*: Externe Eingabe (ungeplant / äußere Intervention)
- ER: Eingabe-Rückmeldung
- FSA: Fahrantrieb-Steuerabschnitt
- HV: Handlungs-Vorgabe Plattformsteuerung
- HV*: Handlungs-Vorgabe Manipulator
- HR: Handlungs-Rückmeldung Plattformsteuerung
- HR*: Handlungs-Rückmeldung Manipulator
- K: Aufstandspunkt (am weitesten distal gelegener)
- KA: Kollaborations-Anforderung
- KW: Kurs-Vorgabe
- KR: Kurs-Rückmeldung
- KVA: Kollisionsvermeidungsabschnitt
- LC1: Erster Lastenträger
- LC2: Zweiter Lastenträger
- LR: Transport-Rückmeldung
- LT: Transport-Auftrag
- LTa: Abholungs-Auftrag
- LTb: Lieferungs-Auftrag
- NRA: Nachgiebigkeits-Regelungsabschnitt
- O*: Belade-Ort
- O': Entlade-Ort
- OW: Zwischenziel-Ort
- PA: Positionsüberwachung (Eigen-Positionsüberwachung)
- PSA: Plattform-Steuerabschnitt
- PBR: Plattform-Bewegungsregelung
- S0: Anfangs-Zustand
- S1: Ziel-Zustand
- SB: Steuerbefehle
- SP: Schwerpunkt auskragende Masse / Gabelträger u. Ladung
- SP': Schwerpunkt Gegengewicht / Bewegungsplattform
- STE: Eigen-Steuermodus
- STF: Fremd-Steuermodus
- TPA: Transport-Planungsabschnitt
- RCS: Roboter-Steuerung
- WEAS: Lagerverwaltungs-System / Wareneingangs- und Warenausgangs-System
- ZA: Zustandsauswertung
- Z1: Autonome / Teilautonome Fahrzone
- Z2: Umlade-Zone
- Z3: Manuelle Zone
- Z4: Übergabezone an Lager- oder Produktionseinrichtung
- ZG: Zonengrenze
- a: Erster horizontaler Abstand / Hebelarm auskragende Masse
- b: Zweiter horizontaler Abstand / Hebelarm Gegengewicht
- x: Erste horizontale Richtung / Vorwärts-Rückwärts-Richtung
- y: Zweite horizontale Richtung / Seitwärts-Richtung
- z: Vertikale Richtung

## Patentansprüche

1. Transportroboter zur Beförderung einer Ladung (60), wobei der Transportroboter (1) eine Bewegungsplattform (10), einen Ladungsaufnahmebereich (11), eine Antriebseinrichtung (12), mindestens eine Steuerung (20) und eine Fremdsteuer-Schnittstelle (21) umfasst, wobei die Fremdsteuer-Schnittstelle (21) dazu ausgebildet ist, eine externe Eingabe (EE, EE*) zu empfangen, und die Steuerung (20) dazu ausgebildet ist, die Antriebseinrichtung (12) zeitweise im Rahmen eines Eigen-Steuermodus (STE) auf Basis autonom erzeugter Kursvorgaben (KV) anzusteuern und zeitweise im Rahmen eines Fremd-Steuermodus (STF) auf Basis von Kursvorgaben (KV) anzusteuern, die gemäß der externen Eingabe (EE, EE*) erzeugt sind, **dadurch gekennzeichnet, dass**
- die Steuerung (20), dazu ausgebildet ist, eine Aktionsfolge (AF) zu verarbeiten, die eine Mehrzahl von Aktionen (Ai) zur Erfüllung eines Transportauftrags (LT) in einer vorgesehenen Reihenfolge umfasst, wobei eine Aktion (Ai) ein maschinenlesbares Datenobjekt ist und einen Soll-Zustand zum Ende der Aktion (Ai) als Ziel-Zustand (S1) vorsieht, und wobei
- die Aktionen (A1, A2, A3) in der Aktionsfolge (AF) mindestens zwei unterschiedliche Aktions-Arten umfassen:
▪ eine autonome Eigen-Aktion (A_e), die vorsieht, dass der Transportroboter (1) im Eigen-Steuermodus (STE) tätig wird, um autonom in den jeweiligen Ziel-Zustand (S1) zu gelangen; UND
▪ eine kollaborative Interaktion (A_k), bei der der Transportroboter (1) eine externe Eingabe (EE) von einer Bedienperson anfordert (KA) und im Fremd-Steuermodus (STF) gemäß der externen Eingabe (EE) tätig wird.

2. Transportroboter nach dem vorhergehenden Anspruch, wobei eine Aktion (Ai) weiterhin einen Soll-Zustand des Transportroboters (1) zu Beginn der Aktion (Ai) als Anfangs-Zustand (S0) definiert, wobei weiter bevorzugt ein Soll-Zustand, insbesondere der Anfangs-Zustand (S0) und/oder der Ziel-Zustand (S1), einer Aktion (Ai) eine Soll-Position und einen Soll-Beladungs-Zustand umfasst.

3. Transportroboter nach einem der vorhergehenden Ansprüche, wobei der Transportroboter eine Ausgabe-Schnittstelle mit einer Verbindung zu einer Anzeigeeinrichtung (13) aufweist und für die Ausführung einer kollaborativen Interaktion (A_k) über die Ausgabe-Schnittstelle (23) erläuternde Informationen über die kollaborative Interaktion (A_k) ausgibt, insbesondere den definierten Ziel-Zustand (S1) und optional den definierten Anfangs-Zustand (S0).

4. Transportroboter nach einem der vorhergehenden Ansprüche, wobei die Steuerung (20) dazu ausgebildet ist,
- den Ist-Zustand des Transportroboters (1) zu überwachen, insbesondere die Ist-Position und den Ist-Beladungszustand des Transportroboters; UND/ODER
- die Mehrzahl der Aktionen (Ai) in der Aktionsfolge (AF) gemäß deren Reihenfolge auszuführen und
▪ Die Ausführung einer als nächstes anstehenden Aktion (Ai) einzuleiten, wenn der momentane Ist-Zustand des Transportroboters (1) mit dem Start-Zustand (S0) gemäß dieser Aktion (Ai) übereinstimmt; UND
▪ den Abschluss einer momentan ausgeführten Aktion (Ai) zu erfassen, wenn der momentane Ist-Zustand des Transportroboters (1) mit dem Ziel-Zustand (S1) übereinstimmt; UND/ODER
- während der Ausführung einer autonomen Eigen-Aktion (A_e) eine ungeplante externe Eingabe (EE*) über die Fremdsteuerschnittstelle (21) zu empfangen, und daraufhin die Ausführung der autonomen Eigen-Aktion (A_e) zu unterbrechen und im Fremd-Steuermodus (STF) gemäß der externen Eingabe (EE*) tätig zu werden.

5. Transportroboter gemäß dem vorhergehenden Anspruch, wobei die Steuerung (20) dazu ausgebildet ist,
- nach Abschluss der ungeplanten externen Eingabe (EE*) zu überprüfen, ob der dann vorliegende Ist-Zustand mit dem Ziel-Zustand (S1) gemäß der unterbrochenen autonomen Eigen-Aktion (A_e) übereinstimmt, und auf Basis dieser Überprüfung und im Hinblick auf die nachfolgenden Aktionen (Ai) in der Aktionsfolge (AF) oder im Hinblick auf die zugehörige Transportaufgabe (LT) selbsttätig zu entscheiden,
▪ ob die unterbrochene autonome Eigen-Aktion (A_e) fortgesetzt wird; oder
▪ ob eine neue autonome Eigen-Aktion (A_e) geplant und ausgeführt wird, welche die unterbrochene Aktion ersetzt; oder
▪ ob eine neue kollaborative Interaktion (A_k) geplant und ausgeführt wird; UND/ODER
- mindestens einen Transport-Auftrag (LT) zu empfangen, der als Daten-Objekt vorliegt und die Abholung einer Ladung (60) von einem Belade-Ort (O*) und/oder die Lieferung einer Ladung (60) an einen Entlade-Ort (O') definiert, UND eine Aktionsfolge (AF) zu planen, die dazu geeignet ist, den Transport-Auftrag (LT) zu erfüllen.

6. Transportroboter nach einem der vorhergehenden Ansprüche, wobei der Transportroboter einen aufweist, der Lastaufnahme-Mechanismus (30) weiter umfassend einen Gabelträger (31) mit einer ersten Gabelzinke (31a) und einer zweiten Gabelzinke (31b), eine Gabelträgerführung (33) und eine Gabelantriebsvorrichtung (34), wobei
- die Gabelträgerführung (33) eine Bewegung des Gabelträgers (31) in einer ersten Horizontalrichtung (x) ermöglicht, die parallel zu den Gabelzinken verläuft, wobei
- der Lastaufnahme-Mechanismus (30) eine Hubeinrichtung (36) mit mindestens einem ein- und ausfahrbaren Stützmittel (36a) aufweist und dazu ausgebildet ist, im ausgefahrenen Zustand an einem distalen Abschnitt mindestens einer Gabelzinke (31a, 31b) eine Kraftabstützung gegenüber dem Untergrund herzustellen und im eingefahrenen Zustand vom Untergrund entfernt zu werden.

7. Logistiksystem zur Beförderung von Ladungen (60) in einem definierten Arbeitsbereich (72), wobei das Logistiksystem (70) mindestens einen Transportroboter (1) und eine Logistiksteuerung (71) umfasst, und wobei die Logistiksteuerung (71) dazu ausgebildet ist,
- eine Mehrzahl von bevorstehenden Wareneingängen und Warenausgängen zu erfassen, wobei einem Wareneingang oder Warenausgang jeweils ein Belade-Ort (O*) und/oder einen Entlade-Ort (O') in dem Arbeitsbereich (72) zugeordnet ist, die geeignet sind, um die betroffene Ware für die Erfüllung des bevorstehenden Wareneingangs oder Warenausgangs zu transportieren, und
- mindestens einen Transport-Auftrag (LT) als maschinenlesbares Datenobjekt zu definieren, wobei der Transport-Auftrag (LT)
▪ die betroffene Ware einer Ladung (60) zuordnet, und
▪ die Abholung (LTa) der Ladung (60) von dem Belade-Ort (O*) und/oder die Lieferung (LTb) der Ladung (60) an den Entlade-Ort (O') definiert.
**dadurch gekennzeichnet, dass**
- die Logistiksteuerung (71) dazu ausgebildet ist, einen Transport-Auftrag (LT) einem Transportroboter (1) zuzuordnen, und wobei
- die Logistiksteuerung (71) und/oder der Transportroboter (1) dazu ausgebildet sind, eine Aktionsfolge (AF) zu planen, die eine Mehrzahl von Aktionen (Ai) zur Erfüllung eines zugeordneten Transportauftrags (LT) in einer vorgesehenen Reihenfolge umfasst, wobei eine Aktion (Ai) als maschinenlesbares Datenobjekt vorliegt und einen Soll-Zustand zum Ende der Aktion (Ai) als Ziel-Zustand (S1) vorsieht, und wobei
- die Aktionen (A1, A2, A3) in der Aktionsfolge (AF) als eine Zusammenstellung aus mindestens zwei unterschiedlichen Aktions-Arten geplant werden:
▪ einer autonomen Eigen-Aktion (A_e), die vorsieht, dass der Transportroboter (1) in einem Eigen-Steuermodus (STE) tätig wird, um selbsttätig in den Ziel-Zustand (S1) zu gelangen; UND
▪ einer kollaborativen Interaktion (A_k), bei der der Transportroboter (1) eine externe Eingabe (EE) von einer Bedienperson (50) anfordert (KA) und in einem Fremd-Steuermodus (STF) gemäß dieser externen Eingabe (EE) tätig wird.

8. Logistik-System nach dem vorhergehenden Anspruch, wobei
- ein Belade-Ort (O*) oder ein Entlade-Ort (O') im Laderaum (103) eines Fernlogistik-Fahrzeugs (102) definierbar ist, insbesondere im Laderaum eines Lastkraftwagens; UND/ODER wobei
- wobei ein Belade-Ort (O*) oder ein Entlade-Ort (O') im Übergabebereich einer Lager- oder Produktionseinrichtung definiert ist.

9. Logistik-System nach einem der vorhergehenden Ansprüche, wobei ein Transport-Auftrag (LT) vorsieht, dass eine Ladung (60) direkt zwischen einem Laderaum (103) eines ersten Fernlogistik-Fahrzeugs (102) und
- einem Laderaum eines weiteren Fernlogistik-Fahrzeugs ODER
- einem Übergabebereich einer Lager- oder Produktionseinrichtung befördert wird.

10. Steuerverfahren für einen Transportroboter (1), wobei der Transportroboter (1) eine Bewegungsplattform (10), einen Ladungsaufnahmebereich (11), eine Antriebseinrichtung (12) und eine Fremdsteuer-Schnittstelle (21) umfasst, und wobei das Steuerverfahren umfasst:
- Einen Aktions-Steuerabschnitt (ASA), der
▪ eine Aktionsfolge (AF) verarbeitet, die eine Mehrzahl von Aktionen (Ai) zur Erfüllung eines Transportauftrags (LT) in einer vorgesehenen Reihenfolge umfasst, wobei eine Aktion (Ai) ein maschinenlesbares Datenobjekt ist und Soll-Zustand zum Ende der Aktion (Ai) als Ziel-Zustand (S1) vorsieht, und wobei die Aktionen (A1, A2, A3) in der Aktionsfolge (AF) mindestens zwei unterschiedlichen Aktions-Arten umfassen: eine autonome Eigen-Aktion (A_e) und eine kollaborative Interaktion (A_k); UND
▪ auf Basis einer Zustandsauswertung über die Soll-Zustände (S0, S1) gemäß den Aktionen (Ai) und dem Ist-Zustand des Transportroboters (1) Handlungsvorgaben (HV) erzeugt;
- Einen Plattform-Steuerabschnitt (PSA), der eine Handlungsvorgabe (HV) empfängt und
▪ Im Falle einer Handlungsvorgabe (HV) für die Umsetzung einer autonomen Eigen-Aktion (A_e): einen Eigen-Steuermodus aktiviert und eine Kurs-Vorgabe (KV) berechnet, die dazu geeignet ist, den Transportroboter (1) in den Ziel-Zustand (S1) überzuführen;
▪ Im Falle einer Handlungsvorgabe (HV) für die Umsetzung einer kollaborativen Interaktion (A_k): eine Kollaborations-Anforderung (KA) ausgibt, einen Fremd-Steuermodus (STF) aktiviert und eine Kurs-Vorgabe (KV) auf Basis von Steuerbefehlen (SB) erzeugt, die gemäß einer externen Eingabe (EE) über eine Fremdsteuerschnittstelle (21) empfangen werden; UND
- Einen Fahrantrieb-Steuerabschnitt (FSA), der eine Kurs-Vorgabe (KV) empfängt und darauf basierend die Antriebseinrichtung (12) des Transportroboters (1) steuert.

11. Steuerverfahren nach dem vorhergehenden Anspruch, wobei die Kurs-Vorgabe (KV) eine omnidirektionale Bewegung des Transportroboters (1) in der Ebene definiert.

12. Steuerverfahren nach einem der vorhergehenden Ansprüche, wobei das Steuerverfahren weiterhin einen Aktions-Planungsabschnitt (APA) umfasst, der
- mindestens einen Transport-Auftrag (LT) empfängt, der ein maschinenlesbares Datenobjekt ist und die Abholung einer Ladung (60) von einem Belade-Ort (O*) und/oder die Lieferung einer Ladung (60) an einen Entlade-Ort (O') definiert, UND
- eine Aktionsfolge (AF) plant, die dazu geeignet ist, den Transport-Auftrag (LT) zu erfüllen, wobei die Aktionen (A1, A2, A3) in der Aktionsfolge (AF) maschinenlesbare Datenobjekte sind und mindestens zwei unterschiedlichen Aktions-Arten umfassen: eine autonome Eigen-Aktion (A_e), die vorsieht, dass der Transportroboter (1) in einem Eigen-Steuermodus (STE) tätig wird, und eine kollaborative Interaktion (A_k), die vorsieht, dass der Transportroboter (1) zunächst eine externe Eingabe (EE) von einer Bedienperson anfordert (KA) und in einem Fremd-Steuermodus (STF) tätig wird.

13. Steuerverfahren für ein Logistik-System (70), wobei das Logistik-System mindestens einen Transportroboter (1) und bevorzugt eine Mehrzahl von Transportrobotern (1) in einem Arbeitsbereich (72), umfasst,
und wobei das Steuerverfahren umfasst:
- Einen Transport-Planungsabschnitt (TPA), der
▪ mindestens einen bevorstehenden Wareneingang oder Warenausgang erfasst, wobei für den Wareneingang oder Warenausgang ein Belade-Ort (O*) und/oder ein Entlade-Ort (O') in dem Arbeitsbereich (72) bestimmt ist, der geeignet ist, um die betroffene Ware für die Erfüllung des bevorstehenden Wareneingangs oder Warenausgangs zu transportieren, und
▪ mindestens einen Transport-Auftrag (LT) definiert, wobei der Transport-Auftrag (LT) ein maschinenlesbares Datenobjekt ist und die zugehörige Ware einer Ladung (60) zuordnet, und weiterhin die Abholung (LTa) einer Ladung (60) von dem ermittelten Belade-Ort (O*) und/oder die Lieferung (LTb) einer Ladung (60) an den ermittelten Entlade-Ort (O`) definiert, und
- einen Aktions-Planungsabschnitt (APA), der mindestens einen Transport-Auftrag (LT) empfängt und eine Aktionsfolge (AF) plant, die dazu geeignet ist, den Transport-Auftrag (LT) zu erfüllen, wobei die Aktionen (A1, A2, A3) in der Aktionsfolge (AF) aus mindestens zwei unterschiedlichen Aktions-Arten definierbar sind:
▪ einer autonomen Eigen-Aktion (A_e), die vorsieht, dass der Transportroboter (1) in einem Eigen-Steuermodus (STE) tätig wird, und
▪ einer kollaborativen Interaktion (A_k), die vorsieht, dass der Transportroboter (1) eine externe Eingabe (EE) von einer Bedienperson (50) anfordert (KA) und in einem Fremd-Steuermodus (STF) tätig wird.

14. Computerprogrammprodukt, gespeichert auf einem Datenträger oder empfangen über eine Datenschnittstelle, wobei das Computerprogrammprodukt auf einer Datenverarbeitungseinrichtung ausführbar ist und Anweisungen enthält, die dazu geeignet sind, bei der Ausführung ein Steuerverfahren nach einem der vorhergehenden Ansprüche durchzuführen.

15. Datenverarbeitungseinrichtung für einen Transportroboter (1) und/oder ein Logistik-System (70) nach einem der vorhergehenden Ansprüche, wobei die Datenverarbeitungseinrichtung dazu ausgebildet ist, ein Steuerverfahren nach einem der vorhergehenden Ansprüche auszuführen.
